(19) Europäisches Patentamt
European Patent Office
Office européen des brevets

(11) **EP 3 576 482 A1**

(12) **EUROPEAN PATENT APPLICATION**
published in accordance with Art. 153(4) EPC

(43) Date of publication:
**04.12.2019 Bulletin 2019/49**

(21) Application number: **18745325.3**

(22) Date of filing: **26.01.2018**

(51) Int Cl.:
***H04W 74/08*** (2009.01)  ***H04W 72/04*** (2009.01)

(86) International application number:
**PCT/JP2018/002450**

(87) International publication number:
**WO 2018/139575 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **27.01.2017 JP 2017012884**

(71) Applicants:
• **Sharp Kabushiki Kaisha**
 **Sakai City, Osaka 590-8522 (JP)**
• **FG Innovation Company Limited**
 **Tuen Mun, New Territories, Hong Kong (CN)**

(72) Inventors:
• **YOSHIMURA Tomoki**
 **Osaka 590-8522 (JP)**
• **SUZUKI Shoichi**
 **Osaka 590-8522 (JP)**
• **OUCHI Wataru**
 **Osaka 590-8522 (JP)**
• **LIU Liqing**
 **Osaka 590-8522 (JP)**

(74) Representative: **Müller Hoffmann & Partner**
 **Patentanwälte mbB**
 **St.-Martin-Strasse 58**
 **81541 München (DE)**

(54) **TERMINAL DEVICE, BASE STATION DEVICE, AND COMMUNICATION METHOD**

(57) In a case that transmission of a PUSCH is transmission of the PUSCH in a 2 step contention based random access procedure, the complex-valued symbol is not mapped to the resource element of last one or more prescribed SC-FDMA symbols in the prescribed subframe, and in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe.

FIG. 14

**Description**

Technical Field

The present invention relates to a terminal apparatus, a base station apparatus, and a communication method.
This application claims priority based on JP 2017-012884 filed on January 27, 2017, the contents of which are incorporated herein by reference.

Background Art

A radio access method and a radio network for cellular mobile communications (hereinafter, referred to as "Long Term Evolution (LTE: Registered Trademark)", or "Evolved Universal Terrestrial Radio Access (EUTRA)") have been studied in the 3rd Generation Partnership Project (3GPP) (NPLs 1, 2, 3, 4, and 5). Further, in 3GPP, a new radio access method (hereinafter referred to as "New Radio (NR)") is being studied. In LTE, a base station apparatus is also referred to as an evolved NodeB (eNodeB). In NR, the base station apparatus is also referred to as gNodeB. In LTE and NR, a terminal apparatus is also referred to as a User Equipment (UE). LTE and NR are cellular communication systems in which multiple areas are deployed in a cellular structure, with each of the multiple areas being covered by a base station apparatus. A single base station apparatus may manage a plurality of cells.
In NPL 6, it has been proposed to discuss a technique for reducing latency and/or overhead of an initial access procedure and a random access procedure (NPL 6).

Citation List

Non Patent Literature

NPL 1: "3GPP TS 36.211 V13.0.0 (2015-12)", 6th January, 2016.
NPL 2: "3GPP TS 36.212 V13.0.0 (2015-12)", 6th January, 2016.
NPL 3: "3GPP TS 36.213 V13.0.0 (2015-12)", 6th January, 2016.
NPL 4: "3GPP TS 36.321 V13.0.0 (2015-12)", 14th January, 2016.
NPL 5: "3GPP TS 36.331 V13.0.0 (2015-12)", 7th January, 2016.
NPL 6: "Motivation for new SI proposal: Enhancements to initial access and scheduling for low-latency LTE", RP-162295, 5th December 2016.

Summary of Invention

Technical Problem

An aspect of the present invention provides a terminal apparatus capable of efficiently performing random access with a base station apparatus, a base station apparatus for communicating with the terminal apparatus, a communication method used for the terminal apparatus, and a communication method used for the base station apparatus.

Solution to Problem

(1) A first aspect of the present invention is a terminal apparatus 1, the terminal apparatus 1 including: a resource mapping unit configured to map a complex-valued symbol to a resource element in one subframe; and a transmitter configured to perform transmission of a PUSCH including the complex-valued symbol in a prescribed subframe, in which in a case that the transmission of the PUSCH is a transmission of the PUSCH in a 2 step contention based random access procedure, the complex-valued symbol is not mapped to the resource element of last one or more prescribed SC-FDMA symbols in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which the complex-valued symbol is mapped is the resource block at least included in a resource block allocated for the PUSCH.

(2) A second aspect of the present invention is a base station apparatus 3, the base station apparatus 3 including: a receiver configured to receive a PUSCH; and a demodulation unit configured to demodulate a complex-valued symbol to be mapped to a resource element of the PUSCH, in which in a case that transmission of the PUSCH is transmission of the PUSCH in a 2 step contention based random access procedure, the complex-valued symbol is not mapped to the resource element of last one or more prescribed SC-FDMA symbols in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which a second sequence is mapped is the resource block at least included in a resource block allocated for the PUSCH.

(3) A third aspect of the present invention is a communication method used for a terminal apparatus 1, the communication method including the steps of: mapping a complex-valued symbol to a resource element in one subframe; and transmitting a PUSCH including the complex-valued symbol in a prescribed subframe, in which in a case that the transmission of the PUSCH is transmission of the PUSCH in a 2 step contention based random access procedure, the complex-valued symbol is not mapped to the resource element of last one or more prescribed SC-FDMA symbols in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which the complex-valued symbol is mapped is the resource block at least included in a resource block allocated for the PUSCH.

(4) A fourth aspect of the present invention is a communication method used for a base station apparatus 3, the communication method including the steps of: receiving a PUSCH; and demodulating a complex-valued symbol to be mapped to a resource element of the PUSCH, in which in a case that transmission of the PUSCH is transmission of the PUSCH in a 2 step contention based random access procedure, the complex-valued symbol is not mapped to the resource element of last one or more prescribed SC-FDMA symbols in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which a second sequence is mapped is the resource block at least included in a resource block allocated for the PUSCH.

Advantageous Effects of Invention

According to one aspect of the present invention, a terminal apparatus and a base station apparatus can efficiently perform a random access procedure.

Brief Description of Drawings

FIG. 1 is a conceptual diagram of a radio communication system according to the present embodiment.
FIG. 2 is a diagram illustrating a schematic configuration of a radio frame according to the present embodiment.
FIG. 3 is a diagram illustrating a schematic configuration of an uplink slot according to the present embodiment.
FIG. 4 is a schematic block diagram illustrating a configuration of a terminal apparatus 1 according to the present embodiment.
FIG. 5 is a diagram illustrating an example of interleaving of a coded bit sequence by a coding unit 1071 according to the present embodiment.
FIG. 6 is a diagram illustrating an example of resource mapping of a second sequence which is input to a multiplexing unit 1077 from a PUSCH generation unit 1073 according to the present embodiment.
FIG. 7 is a schematic block diagram illustrating a configuration of a base station apparatus 3 according to the present embodiment.
FIG. 8 is a diagram illustrating an example of a 4 step contention based random access procedure according to the present embodiment.
FIG. 9 is a diagram illustrating an example of a 2 step contention based random access procedure according to the present embodiment.
FIG. 10 is a diagram illustrating a modification of the 2 step contention based random access procedure according to the present embodiment.

FIG. 11 is a diagram illustrating an example of a non-contention based random access procedure according to the present embodiment.

FIG. 12 is a diagram illustrating an example of a correspondence between an event and a form of a random access procedure according to the present embodiment.

FIG. 13 is a diagram illustrating another example of the correspondence between the event and the form of the random access procedure according to the present embodiment.

FIG. 14 is a diagram illustrating an example of a determination method for a first value $N^{PUSCH}_{end}$ according to the present embodiment.

FIG. 15 is a diagram illustrating an example of the determination method for the first value $N^{PUSCH}_{end}$ according to the present embodiment.

Description of Embodiments

Embodiments of the present invention will be described below.

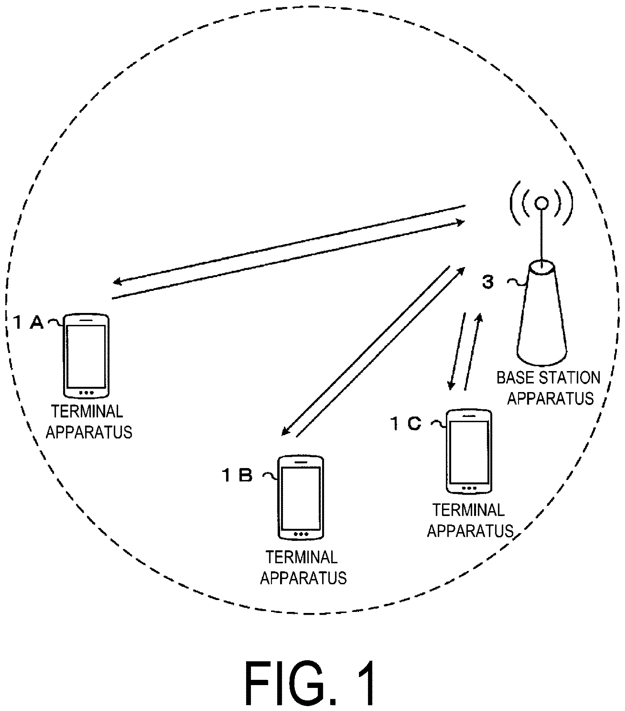

FIG. 1 is a conceptual diagram of a radio communication system according to the present embodiment. In FIG. 1, the radio communication system includes a terminal apparatus 1 and a base station apparatus 3.

Hereinafter, carrier aggregation will be described.

According to the present embodiment, one or a plurality of serving cells is configured for the terminal apparatus 1. A technology in which the terminal apparatus 1 communicates via the plurality of serving cells is referred to as cell aggregation or carrier aggregation. In the carrier aggregation, the configured plurality of serving cells is also referred to as aggregated serving cells.

Time Division Duplex (TDD) and/or Frequency Division Duplex (FDD) is applied to the radio communication system in the present embodiment. For cell aggregation, TDD may be applied to all multiple serving cells. Alternatively, in a case of cell aggregation, serving cells to which TDD is applied and serving cells to which FDD is applied may be aggregated. In the present embodiment, a serving cell to which the FDD is applied is also referred to as an FDD serving cell (FDD cell). In the present embodiment, a serving cell to which the TDD is applied is also referred to as a TDD serving cell (TDD cell). In the present embodiment, a serving cell to which LAA is applied is also referred to as an LAA serving cell (LAA cell).

The FDD is applied in a frame structure type 1. Additionally, the TDD is applied in a frame structure type 2. The frame structure type indicates a structure of a radio frame. The Licenced Assisted Access (LAA) is applied in a frame structure type 3.

The frame structure type 3 (FS3) is applied to an LAA operation (LAA secondary cell operation). Also, only a normal CP may be applied to the FS3. Ten subframes included in the radio frame are used for downlink transmission. The terminal apparatus 1 does not assume that any signal is present in a certain subframe unless specified or unless a downlink transmission is detected in the subframe, and processes the subframe as an empty subframe.

The downlink transmission occupies one or multiple contiguous subframes. The contiguous subframes may include a first subframe and a last subframe. That is, the contiguous subframes may include at least two subframes. The contiguous subframes include contiguous more than one subframe in a time domain. The first subframe starts from any symbol or slot in the subframe (e.g., OFDM symbol #0 or #7). Additionally, the last subframe is occupied by a full subframe (that is, 14 OFDM symbols) or the number of OFDM symbols indicated based on one of DwPTS periods (i.e., the number of symbols assigned to a DwPTS). Here, the DwPTS is a time period included in a special subframe. The DwPTS may be used for switching between an uplink transmission and a downlink transmission, and the like. Note that, whether or not a certain subframe among the contiguous subframes is the last subframe is indicated to the terminal apparatus 1 by a certain field included in a DCI format (that is, DCI). The field may further indicate a subframe in which the field is detected, or the number of OFDM symbols used for the next subframe.

Additionally, in the FS3, the base station apparatus 3 and the terminal apparatus 1 perform a prescribed channel access procedure before a related downlink/uplink transmission is performed. In other words, in the channel access procedure, in a case that the transmission side determines that the channel used for transmission is clear (idle), the base station apparatus 3 and/or terminal apparatus 1 on the transmission side can perform the transmission. Furthermore, in the channel access procedure, in a case that the transmission side cannot determine that the channel used for transmission is clear (or in a case that it is determined that the channel is busy), the base station apparatus 3 and/or terminal apparatus 1 on the transmission side cannot perform the transmission. The channel access procedure is also referred to as Listen before talk (LBT).

An LAA secondary cell may be referred to as an LAA cell. The uplink transmission can occupy one or multiple contiguous subframes. At this time, the terminal apparatus 1 supporting only downlink transmission in the LAA cell and the terminal apparatus 1 supporting downlink transmission and uplink transmission in the LAA cell may notify of a communication scheme supported by the apparatus itself by transmitting capability information of the terminal apparatus 1.

he terminal apparatus 1 and the base station apparatus 3 supporting the FS3 may perform communication in a frequency band which requires no license. An operating band in which the LAA is performed using the FS3 may be managed with a table of EUTRA operating bands. For example, indexes of the EUTRA operating bands may be managed using 1 to 44, and an index of the operating band corresponding to the LAA (or LAA frequency) may be managed using 46. For example, in the index 46, only the downlink frequency band may be defined. Additionally, in some indexes, the uplink frequency band may be secured beforehand as being reserved or defined in the future.

Furthermore, a duplex mode supporting the operating band in which the LAA is performed using the FS3 is TDD.

In the frame structure type 3, a physical channel may be transmitted based at least on the channel access procedure. Additionally, in the frame structure type 3, a physical signal may be transmitted based at least on the channel access procedure.

The multiple configured serving cells include one primary cell and one or multiple secondary cells. The primary cell is a serving cell in which an initial connection establishment procedure has been performed, a serving cell in which a Radio Resource Control connection re-establishment (RRC connection re-establishment) procedure has been started, or a cell indicated as a primary cell during a handover procedure. The secondary cell may be configured at a point of time when or after a Radio Resource Control (RRC) connection is established.

A carrier corresponding to a serving cell in the downlink is referred to as a downlink component carrier. A carrier corresponding to a serving cell in the uplink is referred to as an uplink component carrier. The downlink component carrier and the uplink component carrier are collectively referred to as a component carrier.

The terminal apparatus 1 can perform simultaneous transmission of a plurality of physical channels/a plurality of physical signals in a plurality of serving cells (component carriers), which are aggregated. The terminal apparatus 1 can perform simultaneous reception of a plurality of physical channels/a plurality of physical signals in a plurality of serving cells (component carriers), which are aggregated.

In a case that Dual Connectivity (DC) is configured for the terminal apparatus, a Master Cell Group (MCG) is a subset of all serving cells, and a Secondary Cell Group (SCG) is a subset of serving cells that are not part of the MCG. In a case that the DC is not configured for the terminal apparatus, the MCG includes all the serving cells. The MCG includes a primary cell and zero or more than zero secondary cell. The SCG includes a primary secondary cell and zero or more than zero secondary cell.

The MCG may include one primary TAG and zero or more than zero secondary TAG. The SCG may include one primary TAG and zero or more than zero secondary TAG.

A Timing Advance Group (TAG) is a group of serving cells configured by Radio Resource Control (RRC). An identical value of a timing advance is applied to the serving cells included in an identical TAG. The timing advance is used to adjust PUSCH/PUCCH/SRS/DMRS transmission timing in the serving cell. A primary TAG of the MCG may include a primary cell and zero or more than zero of a secondary cell. The primary TAG of the SCG may include a primary secondary cell and zero or more than zero of a secondary cell. The secondary TAG may include one or more than one secondary cell. The secondary TAG does not include the primary cell and the primary secondary cell.

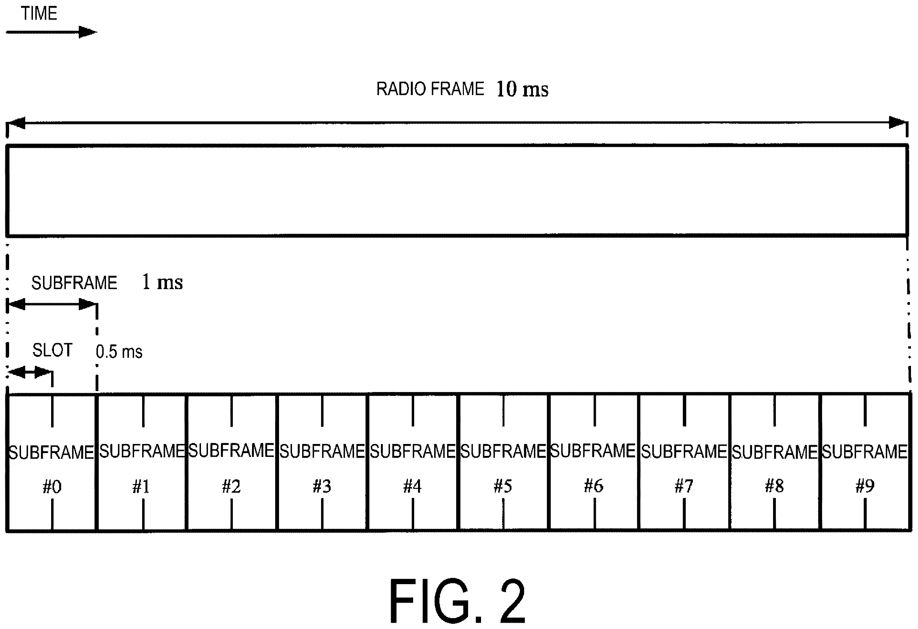

FIG. 2 is a diagram illustrating a schematic configuration of the radio frame according to the present embodiment. In FIG. 2, the horizontal axis is a time axis.

Various field sizes in the time domain are expressed by the number of time units $T_s$ = 1/(15000 . 2048) seconds. A length of the radio frame is $T_f$ = 307200 · $T_s$ = 10 ms (milliseconds). Each of the radio frames includes ten contiguous subframes in the time domain. A length of each subframe is $T_{subframe}$ = 30720 · $T_s$ = 1 ms. Each subframe i includes two contiguous slots in the time domain. The two contiguous slots in the time domain are a slot having a slot number $n_s$ of 2i in the radio frame and a slot having a slot number $n_s$ of 2i + 1 in the radio frame. A length of each slot is $T_{slot}$ = 153600 · $n_s$ = 0.5 ms. Each of the radio frames includes ten contiguous subframes in the time domain. Each of the radio frames includes 20 contiguous slots ($n_s$ = 0, 1,..., 19) in the time domain. A subframe is also referred to as a Transmission Time Interval (TTI).

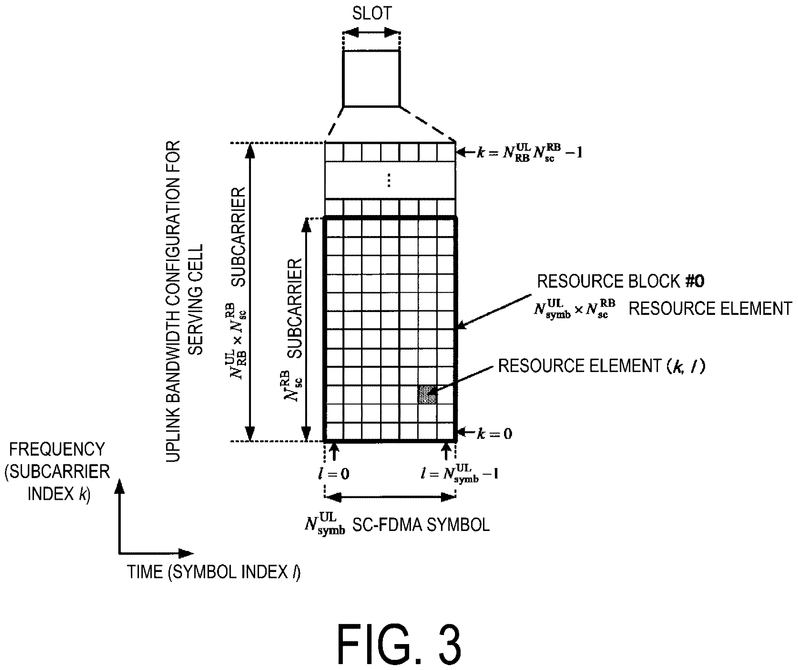

A configuration of a slot according to the present embodiment will be described below. FIG. 3 is a diagram illustrating a schematic configuration of an uplink slot according to the present embodiment. FIG. 3 illustrates a configuration of an uplink slot in a cell. In FIG. 3, the horizontal axis is a time axis, and the vertical axis is a frequency axis. In FIG. 3, 1 is a Single Carrier-Frequency Division Multiple Access (SC-FDMA) symbol number/index, and k is a subcarrier number/index.

The physical signal or the physical channel transmitted in each of the slots is expressed by a resource grid. In uplink, the resource grid is defined by multiple subcarriers and multiple SC-FDMA symbols. Each element within the resource grid is referred to as a resource element. The resource element is expressed by the subcarrier number/index k and the SC-FDMA symbol number/index 1.

The resource grid is defined for each antenna port. In the present embodiment, a description is given for one antenna port. The present embodiment may be applied to each of multiple antenna ports.

The uplink slot includes multiple SC-FDMA symbols 1 (1 = 0, 1,..., $N^{UL}_{symb}$) in the time domain. $N^{UL}_{symb}$ indicates the number of SC-FDMA symbols included in one uplink slot. For a normal Cyclic Prefix (normal CP), $N^{UL}_{symb}$ is 7. For an extended Cyclic Prefix (extended CP), $N^{UL}_{symb}$ is 6.

The uplink slot includes a plurality of subcarriers k (k = 0, 1,..., $N^{UL}_{RB} \times N^{RB}_{sc}$) in a frequency domain. $N^{UL}_{RB}$ is an uplink bandwidth configuration for the serving cell, expressed by a multiple of $N^{RB}_{sc}$. $N^{RB}_{sc}$ is a (physical) resource block size in the frequency domain, expressed by the number of subcarriers. In the present embodiment, a subcarrier interval $\Delta f$ is 15 kHz, $N^{RB}_{sc}$ is a size of 12 subcarriers. In other words, in the present embodiment, $N^{RB}_{sc}$ is 180 kHz.

A resource block is used to express mapping of a physical channel to resource elements. For the resource block, a virtual resource block and a physical resource block are defined. The physical channel is first mapped to the virtual resource block. Thereafter, the virtual resource block is mapped to the physical resource block. One physical resource block is defined by $N^{UL}_{symb}$ consecutive SC-FDMA symbols in the time domain and by $N^{RB}_{sc}$ consecutive subcarriers in the frequency domain. Hence, one physical resource block is constituted by ($N^{UL}_{symb} \times N^{RB}_{sc}$) resource elements. One physical resource block corresponds to one slot in the time domain. The physical resource blocks are numbered (0, 1,..., $N^{UL}_{RB}$ - 1) in ascending order of frequencies in the frequency domain.

The downlink slot according to the present embodiment includes a plurality of OFDM symbols. Since a configuration of the downlink slot according to the present embodiment is the same except for a point that the resource grid is defined by multiple subcarriers and multiple OFDM symbols, the description of the configuration of the downlink slot will be omitted.

Physical channels and physical signals according to the present embodiment will be described.

In FIG. 1, in uplink radio communication from the terminal apparatus 1 to the base station apparatus 3, the following uplink physical channels are used. The uplink physical channels are used by a physical layer for transmission of information output from a higher layer.

- Physical Uplink Control CHannel (PUCCH)
- Physical Uplink Shared CHannel (PUSCH)
- Physical Random Access CHannel (PRACH)

The PUCCH is used to transmit Uplink Control Information (UCI). The uplink control information includes: downlink Channel State Information (CSI); a Scheduling Request (SR) used to request for a PUSCH (Uplink-Shared CHannel (UL-SCH)) resource for initial transmission; and a Hybrid Automatic Repeat request ACKnowledgement (HARQ-ACK) for downlink data (a Transport block, a Medium Access Control Protocol Data Unit (MAC PDU), a Downlink-Shared CHannel (DL-SCH), or a Physical Downlink Shared CHannel (PDSCH)). The HARQ-ACK indicates an acknowledgement (ACK) or a negative-acknowledgement (NACK). The HARQ-ACK is also referred to as HARQ feedback, HARQ information, HARQ control information, and ACK/NACK.

The CSI includes a Channel Quality Indicator (CQI) and a Rank Indicator (RI). The channel quality indicator may further include a Precoder Matrix Indicator. The CQI is an indicator associated with a channel quality (propagation strength), and the PMI is an indicator that indicates a precoder. The RI is an indicator indicating a transmission rank.

The PUSCH is used for transmission of uplink data (UpLink-Shared CHannel (UL-SCH)). The PUSCH may be used to transmit the HARQ-ACK and/or the channel state information along with the uplink data. Furthermore, the PUSCH may be used to transmit only the channel state information or to transmit only the HARQ-ACK and the channel state information. The PUSCH is used to transmit a random access message 3.

The PRACH is used to transmit a random access preamble (random access message 1). The PRACH is used for indicating the initial connection establishment procedure, the handover procedure, the connection re-establishment procedure, synchronization (timing adjustment) for uplink transmission, and the request for the PUSCH (UL-SCH) resource.

The random access preamble may be given by cyclic-shifting a Zadoff-Chu sequence corresponding to a physical root sequence index u. The Zadoff-Chu sequence is generated based on the physical root sequence index u. In one cell, multiple random access preambles may be defined. The random access preamble may be specified by an index of the random access preamble. Different random access preambles corresponding to different indexes of the random access preambles correspond to different combinations of the physical root sequence index u and the cyclic shift, respectively. The physical root sequence index u and the cyclic shift may be given based at least on information included in system information.

The Zadoff-Chu sequence $x_u$ (n) corresponding to the physical root sequence index u is given by Equation (1) described below. Here, e is a Napier's constant. $N_{ZC}$ is a length of the Zadoff-Chu sequence $x_u$ (n). Additionally, n is an integer incremented from 0 to $N_{ZC}$ - 1.

Equation 1

$$x_u(n) = e^{-j\frac{\pi u n(n+1)}{N_{ZC}}}, \quad 0 \le n \le N_{ZC} - 1$$

The random access preamble (a sequence of the random access preamble) $x_{u,v}(n)$ is given by Equation (2) described below. $C_v$ is a value of the cyclic shift. X mod Y is a function which outputs a remainder acquired by dividing X by Y.

Equation 2

$$x_{u,v}(n) = x_u((n + C_v) \bmod N_{ZC})$$

In FIG. 1, the following uplink physical signal is used in the uplink radio communication. The uplink physical signal is not used for transmitting information output from the higher layer, but is used by the physical layer.

- Uplink Reference Signal (UL RS)

According to the present embodiment, the following two types of uplink reference signals are used.

- Demodulation Reference Signal (DMRS)
- Sounding Reference Signal (SRS)

DMRS is associated with transmission of PUSCH or PUCCH. The DMRS is time-multiplexed with the PUSCH or the PUCCH. The base station apparatus 3 uses the DMRS in order to perform channel compensation of the PUSCH or the PUCCH. Transmission of both of the PUSCH and the DMRS is hereinafter referred to simply as transmission of the PUSCH. Transmission of both of the PUCCH and the DMRS is hereinafter referred to simply as transmission of the PUCCH.

SRS is not associated with the transmission of PUSCH or PUCCH. The base station apparatus 3 may use the SRS for measuring the channel state. The SRS is transmitted in the last SC-FDMA symbol of the subframe in the uplink subframe or the SC-FDMA symbol in an UpPTS.

In FIG. 1, the following downlink physical channels are used for downlink radio communication from the base station apparatus 3 to the terminal apparatus 1. The downlink physical channels are used by the physical layer for transmission of information output from a higher layer.

- Physical Broadcast CHannel (PBCH)
- Physical Control Format Indicator CHannel (PCFICH)
- Physical Hybrid automatic repeat request Indicator CHannel (PHICH)
- Physical Downlink Control CHannel (PDCCH)
- Enhanced Physical Downlink Control CHannel (EPDCCH)
- Physical Downlink Shared CHannel (PDSCH)
- Physical Multicast CHannel (PMCH)

The PBCH is used for broadcasting a Master Information Block (MIB, a Broadcast CHannel (BCH)) that is shared by the terminal apparatuses 1. The MIB is transmitted at intervals of 40 ms, and, within the interval, the MIB is repeatedly transmitted every 10 ms. Specifically, initial transmission of the MIB is performed in a subframe 0 in a radio frame that satisfies SFN mod 4 = 0, and re-transmission (repetition) of the MIB is performed in subframes 0 in all the other radio frames. A system frame number (SFN) is a radio frame number. The MIB is system information. For example, the MIB includes information indicating the SFN.

The PCFICH is used for transmission of information indicating a region (OFDM symbols) to be used for transmission of the PDCCH.

The PHICH is used for transmission of an HARQ indicator for uplink data (Uplink Shared CHannel (UL-SCH)) received by the base station apparatus 3. The HARQ indicator indicates the HARQ-ACK.

The PDCCH and the EPDCCH are used to transmit downlink control information (DCI). The downlink control information is also referred to as DCI format. The downlink control information includes a downlink grant and an uplink grant. The downlink grant is also referred to as a downlink assignment or a downlink allocation.

One downlink grant is used for scheduling of one PDSCH within one serving cell. The downlink grant is used for the scheduling of the PDSCH within the same subframe as the subframe on which the downlink grant is transmitted.

One uplink grant is used for scheduling of one PUSCH within one serving cell. The uplink grant is used for scheduling of the PUSCH within the fourth or later subframe from the subframe in which the uplink grant is transmitted.

CRC parity bits added to a downlink grant or an uplink grant are scrambled with a Cell-Radio Network Temporary Identifier (C-RNTI), a Temporary C-RNTI, a Semi Persistent Scheduling (SPS) C-RNTI, and a Random Access-Radio Network Temporary Identifier (RA-RNTI). The C-RNTI and the SPS C-RNTI are identifiers for identifying a terminal apparatus within a cell. The Temporary C-RNTI is used during a contention based random access procedure. The RA-RNTI is used for scheduling of the random access response. The uplink grant to which the CRC parity bits scrambled with the RNTI are added is also referred to as an uplink grant for RNTI or an uplink grant corresponding to RNTI. The PDCCH including the uplink grant to which the CRC parity bits scrambled with the RNTI are added is also referred to as a PDCCH for RNTI, a PDCCH corresponding to RNTI, a PDCCH addressed to RNTI, or a PDCCH including RNTI.

The C-RNTI is used to control the PDSCH or the PUSCH in one subframe. The terminal apparatus 1 may transmit the PUSCH including a transport block based on detection of the PDCCH that includes the uplink grant to which the CRC parity bits scrambled with the C-RNTI are added. Re-transmission of the transport block may be indicated by the PDCCH including the uplink grant to which the CRC parity bits scrambled with the C-RNTI are added.

The SPS C-RNTI is used to periodically allocate a resource for the PDSCH or the PUSCH. The terminal apparatus 1 detects the PDCCH including the uplink grant to which the CRC parity bits scrambled with the SPS C-RNTI are added, and in a case that the uplink grant is determined to be valid as an SPS activation command, stores the uplink grant as a configured uplink grant. A MAC layer of the terminal apparatus 1 considers the configured uplink grant to be periodically generated. The subframe in which the configured uplink grant is considered to be generated is given by a first period and a first offset. The terminal apparatus 1 receives information indicating the first period from the base station apparatus 3. The re-transmission of the transport block transmitted in the PUSCH periodically allocated is indicated by the uplink grant to which the CRC parity bits scrambled with the SPS C-RNTI are added. The configured uplink grant is also referred to as an uplink grant configured by Medium Access Control (MAC), or a first configured uplink grant.

The PDSCH is used to transmit downlink data (Downlink Shared CHannel (DL-SCH)). The PDSCH is used to transmit a random access message 2 (random access response). The PDSCH is used to transmit a handover command. The PDSCH is used to transmit system information including a parameter used for initial access.

The PMCH is used to transmit multicast data (multicast channel (MCH)).

In FIG. 1, the following downlink physical signals are used for the downlink radio communication. The downlink physical signals are not used for transmission of information output from the higher layer, but are used by the physical layer.

- Synchronization signal (SS)
- Downlink Reference Signal (DL RS)

The synchronization signal is used for the terminal apparatus 1 to take synchronization in the frequency domain and the time domain in the downlink. The synchronization signal includes a Primary Synchronization Signal (PSS) and a Second Synchronization Signal (SSS).

The Downlink Reference Signal is used for the terminal apparatus 1 to perform channel compensation on a downlink physical channel. The downlink reference signal is used in order for the terminal apparatus 1 to obtain the downlink channel state information.

According to the present embodiment, the following seven types of downlink reference signals are used.

- Cell-specific Reference Signal (CRS)
- UE-specific Reference Signal (URS) relating to the PDSCH
- Demodulation Reference Signal (DMRS) relating to the EPDCCH
- Non-Zero Power Channel State Information - Reference Signal (NZP CSI-RS)
- Zero Power Channel State Information - Reference Signal (ZP CSI-RS)
- Multimedia Broadcast and Multicast Service over Single Frequency Network Reference signal (MBSFN RS)
- Positioning Reference Signal (PRS)

The downlink physical channels and the downlink physical signals are collectively referred to as a downlink signal. The uplink physical channels and the uplink physical signals are collectively referred to as an uplink signal. The downlink physical channels and the uplink physical channels are collectively referred to as a physical channel. The downlink physical signals and the uplink physical signals are collectively referred to as a physical signal.

The BCH, the MCH, the UL-SCH, and the DL-SCH are transport channels. A channel used in a Medium Access Control (MAC) layer is referred to as a transport channel. A unit of the transport channel used in the MAC layer is also referred to as a transport block (TB) or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and coding processing is performed for each codeword.

The base station apparatus 3 and the terminal apparatus 1 exchange (transmit and/or receive) a signal in a higher layer. For example, the base station apparatus 3 and the terminal apparatus 1 may transmit and/or receive Radio Resource Control (RRC) signaling (also referred to as RRC message or RRC information) in the RRC layer. Furthermore, the base station apparatus 3 and the terminal apparatus 1 may transmit and/or receive, in the Medium Access Control (MAC) layer, a MAC Control Element (CE). Here, the RRC signaling and/or the MAC CE is also referred to as higher layer signaling.

The PUSCH and the PDSCH are used to transmit the RRC signaling and the MAC CE. Here, the RRC signaling transmitted from the base station apparatus 3 on the PDSCH may be signaling common to multiple terminal apparatuses 1 in a cell. The RRC signaling transmitted from the base station apparatus 3 on the PDSCH may be signaling dedicated to a certain terminal apparatus 1 (also referred to as dedicated signaling or UE specific signaling). A cell-specific parameter may be transmitted by using the signaling common to the multiple terminal apparatuses 1 in the cell or the signaling dedicated to the certain terminal apparatus 1. A UE-specific parameter may be transmitted by using the signaling dedicated to the certain terminal apparatus 1.

Configurations of apparatuses according to the present embodiment will be described below.

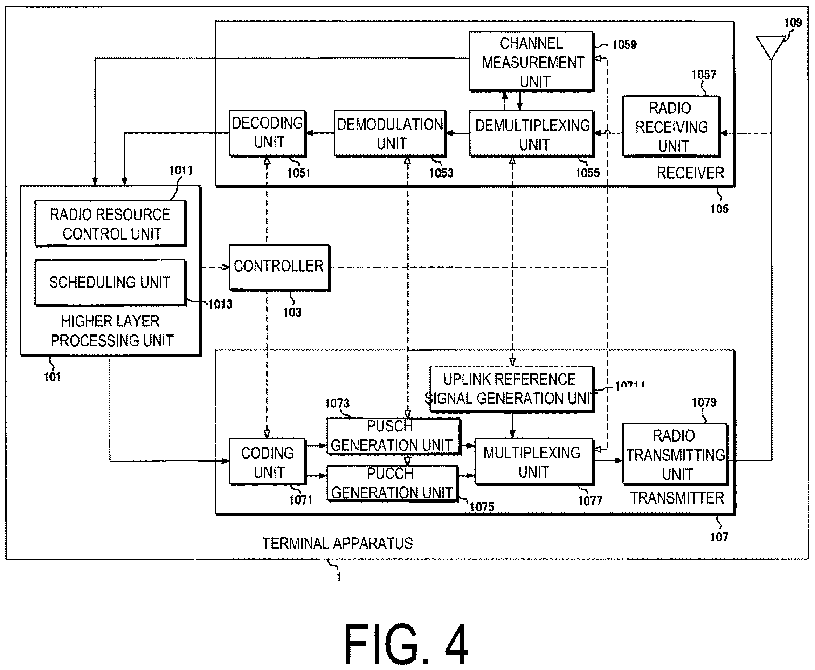

FIG. 4 is a schematic block diagram illustrating a configuration of the terminal apparatus 1 according to the present embodiment. As illustrated in the diagram, the terminal apparatus 1 is configured to include a higher layer processing unit 101, a controller 103, a receiver 105, a transmitter 107, and a transmit and/or receive antenna 109. The higher layer processing unit 101 is configured to include a radio resource control unit 1011 and a scheduling unit 1013. The receiver 105 is configured to include a decoding unit 1051, a demodulation unit 1053, a demultiplexing unit 1055, a radio receiving unit 1057, and a channel measurement unit 1059. The transmitter 107 is configured to include a coding unit 1071, a PUSCH generation unit 1073, a PUCCH generation unit 1075, a multiplexing unit 1077, a radio transmitting unit 1079, and an uplink reference signal generation unit 10711.

The higher layer processing unit 101 outputs uplink data generated by a user operation or the like, to the transmitter 107. The higher layer processing unit 101 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 101 generates control information for control of the receiver 105 and the transmitter 107 based on downlink control information or the like received by the PDCCH, and outputs the generated control information to the controller 103.

The radio resource control unit 1011 included in the higher layer processing unit 101 manages various pieces of configuration information of the terminal apparatus 1 itself. For example, the radio resource control unit 1011 manages the configured serving cell. Furthermore, the radio resource control unit 1011 generates information to be mapped to each uplink channel, and outputs the generated information to the transmitter 107.

The scheduling unit 1013 included in the higher layer processing unit 101 stores the downlink control information received via the receiver 105. The scheduling unit 1013 controls the transmitter 107 via the controller 103 to transmit the PUSCH in accordance with the received uplink grant in a fourth or third subframe after the sub frame in which the uplink grant has been received. The scheduling unit 1013 controls the receiver 105 via the controller 103 to receive the PDSCH in accordance with the received downlink grant in the subframe in which the downlink grant has been received.

In accordance with the control information originating from the higher layer processing unit 101, the controller 103 generates a control signal for control of the receiver 105 and the transmitter 107. The controller 103 outputs the generated control signal to the receiver 105 and the transmitter 107 to control the receiver 105 and the transmitter 107.

In accordance with the control signal input from the controller 103, the receiver 105 demultiplexes, demodulates, and decodes a reception signal received from the base station apparatus 3 through the transmit and/or receive antenna 109, and outputs the resulting information to the higher layer processing unit 101.

The radio receiving unit 1057 performs orthogonal demodulation on the downlink signal received through the transmit and/or receive antenna 109, and converts the orthogonally-demodulated analog signal to a digital signal. The radio receiving unit 1057 performs Fast Fourier Transform (FFT) on the digital signal, and extracts a signal in the frequency domain. The radio receiving unit 1057 outputs the signal in the frequency domain to the demultiplexing unit 1055. Here, the signal in the frequency domain is expressed as a complex-valued symbol corresponding to the subcarrier index k and the symbol index 1.

The demultiplexing unit 1055 demultiplexes the signal in the frequency domain input from the radio receiving unit 1057 into the PDCCH, the PDSCH, and the downlink reference signal. The demultiplexing unit 1055 outputs the downlink reference signal resulting from the demultiplexing, to the channel measurement unit 1059. Furthermore, the demultiplexing unit 1055 outputs the PDCCH and PDSCH resulting from the demultiplexing, to the demodulation unit 1053.

The demodulation unit 1053 demodulates the PDCCH and the PDSCH in compliance with a modulation scheme, such as QPSK, 16 Quadrature Amplitude Modulation (QAM), 64 QAM, or the like, and outputs a result of the demodulation to the decoding unit 1051.

The decoding unit 1051 decodes the downlink data, and outputs, to the higher layer processing unit 101, the downlink data resulting from the decoding. The channel measurement unit 1059 calculates a downlink channel estimate from the downlink reference signal and outputs the calculated downlink channel estimate to the demultiplexing unit 1055. The channel measurement unit 1059 calculates the channel state information, and outputs the channel state information to the higher layer processing unit 101.

The transmitter 107 generates the uplink reference signal in accordance with the control signal input from the controller 103, codes and modulates the uplink data and the uplink control information input from the higher layer processing unit 101, multiplexes the PUCCH, the PUSCH, and the uplink reference signal, and transmits a result of the multiplexing to the base station apparatus 3 through the transmit and/or receive antenna 109.

In the transmitter 107, the number of OFDM symbols used for PUSCH transmission may be given based at least on the random access procedure. Additionally, the number of OFDM symbols used for the PUSCH transmission may be given based at least on a type/form of the random access procedure to which the PUSCH transmission corresponds. Additionally, the number of OFDM symbols used for the PUSCH transmission may be given based at least on a format of the random access preamble. Additionally, the number of OFDM symbols used for the PUSCH transmission may be given for each format of the random access preamble. Additionally, the number of OFDM symbols used for the PUSCH transmission may be given based at least on the higher layer signaling. The type/form of the random access procedure will be described later.

The coding unit 1071 performs coding on the uplink control information and the uplink data input from the higher layer processing unit 101, and outputs the coded bits to the PUSCH generation unit 1073 and/or the PUCCH generation unit 1075.

The coding unit 1071 codes the uplink data and generates a coded bit sequence. The coding unit 1071 calculates the number of SC-FDMA symbols $N^{PUSCH\text{-}initial}_{symb}$ for PUSCH initial transmission. Here, the PUSCH initial transmission refers to a PUSCH used for initial transmission of a transport block including the coded bit sequence. Additionally, the coding unit 1071 interleaves (reorders, reallocates, and rearranges) the coded bit sequence based at least on the number of SC-FDMA symbols $N^{PUSCH\text{-}initial}_{symb}$ to generate a first sequence. The first sequence is input to the PUSCH generation unit 1073. Here, a method for calculating the number of SC-FDMA symbols $N^{PUSCH\text{-}initial}_{symb}$ for the PUSCH initial transmission will be described later.

Here, the interleaving of the coded bit sequence may be rearrangement of the coded bit sequence. The rearrangement of the coded bit sequence may be given based at least on the number of SC-FDMA symbols for the PUSCH initial transmission. Here, a matrix may be used for interleaving of the coded bit sequence. The column in the matrix corresponds to the SC-FDMA symbol. One element of the matrix corresponds to one coded modulation symbol. The coded modulation symbol is a group of X coded bits. X is a modulation order $Q_m$ for the transport block (uplink data). One complex-valued symbol is generated from one coded modulation symbol.

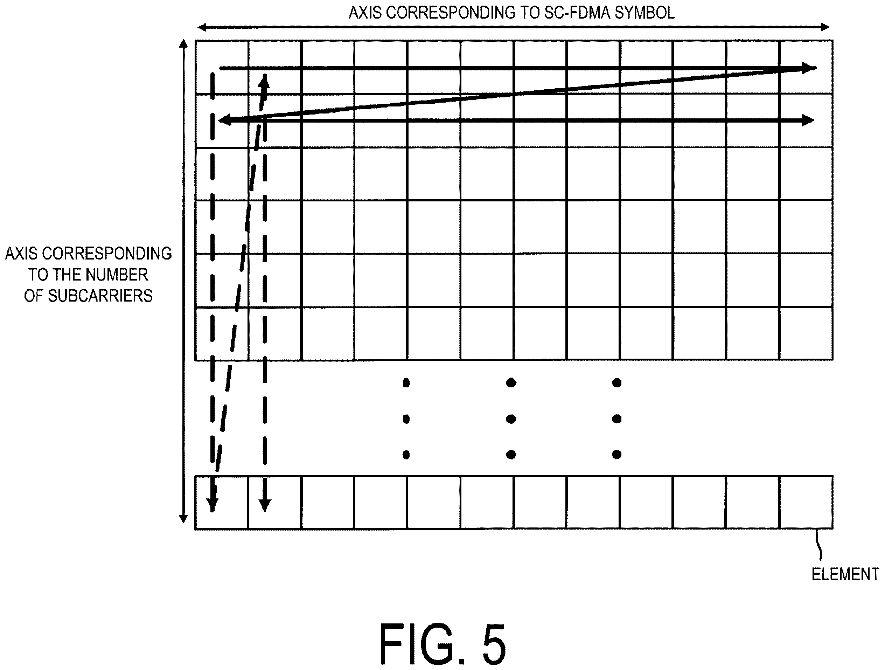

FIG. 5 is a diagram illustrating an example of interleaving of the coded bit sequence by the coding unit 1071 according to the present embodiment. In the example illustrated in FIG. 5, the vertical axis (or a row of the matrix) is an axis corresponding to the number of subcarriers. For example, the number of rows $R_{row}$ is given by $R_{row} = H_{total}/C_{mux}$. Here, $H_{total}$ is given by $H_{total} = H_1 + Q_{RI}$. Here, $H_1$ is the number of coded modulation symbols in the first sequence. In a case that the CQI is transmitted in the PUSCH, $H_1$ may be given by a sum of the number of coded modulation symbols in the first sequence and the number of coded modulation symbols for the coded bit sequence of the CQI. Additionally, the $Q_{RI}$ is the number of coded modulation symbols of the coded bit sequence of the RI. In a case that the RI is not transmitted in the PUSCH, $Q_{RI} = 0$. Additionally, in a case that the number of layers used for transmission of the transport block corresponding to the first sequence is $N_L$, the number of rows $R_{row}$ is given by $R_{row} = NL * H_{total}/C_{mux}$. Here, $C_{mux}$ is given by $C_{mux} = N^{PUSCH}_{symb}$. Additionally, the number of SC-FDMA symbols $N^{PUSCH}_{symb}$ in the PUSCH is given by $N^{PUSCH}_{symb} = N^{PUSCH\text{-}initial}_{symb}$. In the example illustrated in FIG. 5, an example of $C_{mux} = 12$ is illustrated.

In FIG. 5, first, the coded bit sequence is mapped (in units of rows) to a direction indicated by a solid line for each group of X coded bits. Here, the mapping may be Writing. Then, the sequence mapped for each group of X coded bits is output to the direction indicated by a dotted line (in units of columns) to generate the first sequence. Here, the outputting may be Reading.

In the PUSCH generation unit 1073, one complex-valued symbol is generated by modulating, based on a prescribed modulation scheme, the coded modulation symbol formed by the group of X coded bits allocated on each element in FIG. 5. Additionally, in the PUSCH generation unit 1073, the multiple complex-valued symbols corresponding to each column in FIG. 5 are subjected to discrete Fourier transform (Transform Precoding) together, and a second sequence is generated. The second sequence is output to the multiplexing unit 1077.

The PUCCH generation unit 1075 generates a PUCCH signal based on the coded bit of the uplink control information (HARQ-ACK, CQI, RI, and the like) input from the coding unit 1071, and outputs the generated PUCCH signal to the multiplexing unit 1077.

The uplink reference signal generation unit 10711 generates an uplink reference signal, and outputs the generated uplink reference signal to the multiplexing unit 1077.

The multiplexing unit 1077 multiplexes, in accordance with the control signal input from the controller 103, the signal input from the PUSCH generation unit 1073 and/or the signal input from the PUCCH generation unit 1075 and/or the uplink reference signal input from the uplink reference signal generation unit 10711 on the uplink resource element for each transmit antenna port. The multiplexing unit 1077 inputs the multiplexed signal to the radio transmitting unit 1079.

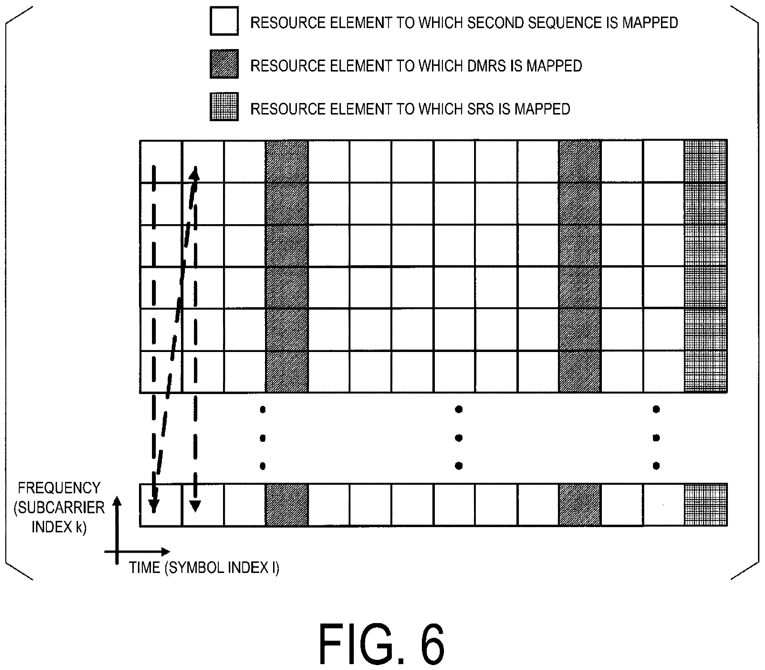

FIG. 6 is a diagram illustrating an example of resource mapping of the second sequence which is input to the multiplexing unit 1077 from the PUSCH generation unit 1073 according to the present embodiment. In FIG. 6, the vertical axis indicates the frequency (subcarrier index k), and the horizontal axis indicates time (symbol index 1). Additionally, the second sequence is mapped to each resource element in units of columns, as indicated by dotted arrows. In other words, the second sequence is mapped to the resource element in the frequency direction (Frequency first mapping). Here, the resource element to which the second sequence is mapped is a resource element at least included in a resource block allocated for the PUSCH transmission. Additionally, the second sequence may be included in the resource block allocated for the PUSCH transmission and may not be mapped to a resource element satisfying a prescribed condition. For example, in FIG. 6, in a case that the DMRS is mapped to a resource element indicated by diagonal lines, the second sequence is not mapped to the resource element indicated by the diagonal lines. Additionally, in FIG. 6, in a case that the SRS is mapped to a resource element indicated by grid lines, the second sequence is not mapped to the resource element indicated by the grid lines. A specific method in which the second sequence is mapped to the resource element will be described later.

The radio transmitting unit 1079 performs Inverse Fast Fourier Transform (IFFT) on a signal resulting from the multiplexing, generates a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 109 for transmission.

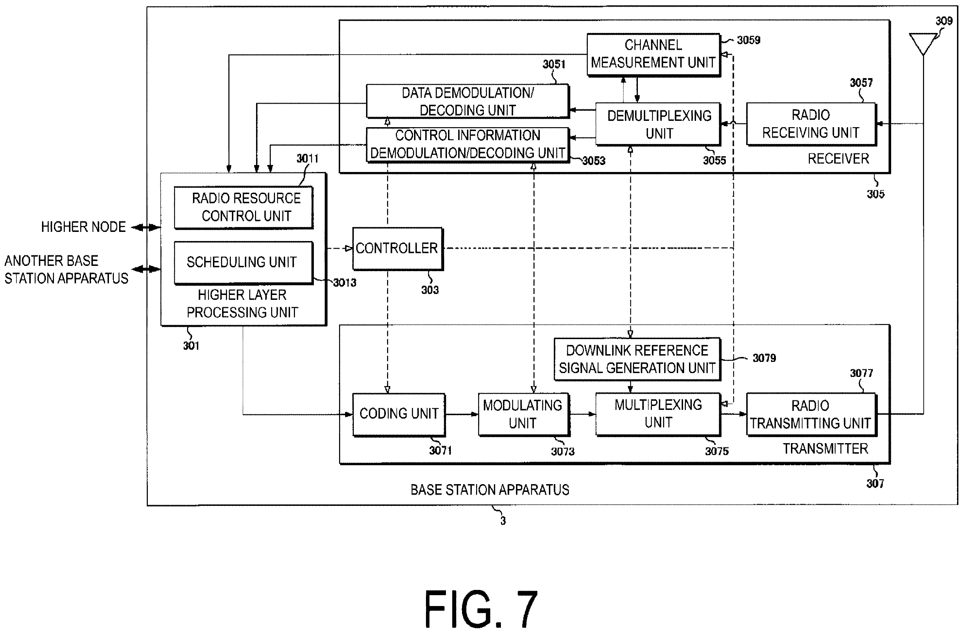

FIG. 7 is a schematic block diagram illustrating a configuration of the base station apparatus 3 according to the present embodiment. As is illustrated, the base station apparatus 3 is configured to include a higher layer processing unit 301, a controller 303, a receiver 305, a transmitter 307, and a transmit and/or receive antenna 309. The higher layer processing unit 301 is configured to include a radio resource control unit 3011 and a scheduling unit 3013. The receiver 305 is configured to include a data demodulation/decoding unit 3051, a control information demodulation/decoding unit 3053, a demultiplexing unit 3055, a radio receiving unit 3057, and a channel measurement unit 3059. The transmitter 307 is configured to include a coding unit 3071, a modulating unit 3073, a multiplexing unit 3075, a radio transmitting unit 3077, and a downlink reference signal generation unit 3079.

The higher layer processing unit 301 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 301 generates control information for control of the receiver 305 and the transmitter 307, and outputs the generated control information to the controller 303.

The radio resource control unit 3011 included in the higher layer processing unit 301 generates, or acquires from a higher node, the downlink data mapped to the PDSCH, the RRC signal, and the MAC Control Element (CE), and outputs a result of the generation or the acquirement to the scheduling unit 3013. Furthermore, the radio resource control unit 3011 manages various configuration information for each of the terminal apparatuses 1. For example, the radio resource control unit 3011 performs management or the like of the serving cell configured for the terminal apparatus 1.

The scheduling unit 3013 included in the higher layer processing unit 301 manages radio resources of the PUSCH and the PUCCH to be allocated to the terminal apparatus 1. In a case that the radio resource of the PUSCH is allocated to the terminal apparatus 1, the scheduling unit 3013 generates an uplink grant indicating the allocation of the radio resources of the PUSCH, and outputs the generated uplink grant to the transmitter 307.

Based on the control information originating from the higher layer processing unit 301, the controller 303 generates a control signal for controlling the receiver 305 and the transmitter 307. The controller 303 outputs the generated control signal to the receiver 305 and the transmitter 307 to control the receiver 305 and the transmitter 307.

In accordance with the control signal input from the controller 303, the receiver 305 demultiplexes, demodulates, and decodes the reception signal received from the terminal apparatus 1 through the transmit and/or receive antenna 309, and outputs information resulting from the decoding to the higher layer processing unit 301.

The radio receiving unit 3057 performs orthogonal demodulation on the uplink signal received through the transmit and/or receive antenna 309, and converts the orthogonally-demodulated analog signal to a digital signal. The radio receiving unit 3057 performs Fast Fourier Transform (FFT) on the digital signal, extracts a signal in the frequency domain, and outputs the resulting signal to the demultiplexing unit 3055.

The demultiplexing unit 3055 demultiplexes the signal input from the radio receiving unit 3057 into the PUCCH, the PUSCH, and the signal such as the uplink reference signal. The demultiplexing is performed based on radio resource allocation information that is determined in advance by the base station apparatus 3 using the radio resource control unit 3011 and that is included in the uplink grant notified to each of the terminal apparatuses 1. The demultiplexing unit 3055 makes a compensation of channels including the PUCCH/sPUCCH and the PUSCH/sPUSCH from the channel estimate input from the channel measurement unit 3059. Furthermore, the demultiplexing unit 3055 outputs an uplink reference signal resulting from the demultiplexing, to the channel measurement unit 3059.

Since a method for the demultiplexing unit 3055 to demultiplex the signal input from the radio receiving unit 3057 into the PUCCH, the PUSCH, and signals such as the uplink reference signal corresponds to the method of the resource mapping of the multiplexing unit 1077 included in the terminal apparatus 1, description thereof is omitted.

The demultiplexing unit 3055 acquires a complex-valued symbol of the uplink data and a complex-valued symbol of the uplink control information from the demultiplexed PUCCH and PUSCH signals. The demultiplexing unit 3055 outputs the complex-valued symbol of the uplink data acquired from the PUSCH signal to the data demodulation/decoding unit 3051. The demultiplexing unit 3055 outputs the PUSCH signal or the complex-valued symbol of the uplink control information acquired from the PUCCH signal to the control information demodulation/decoding unit 3053.

The channel measurement unit 3059 measures the channel estimate, the channel quality and the like, based on the uplink reference signal input from the demultiplexing unit 3055, and outputs a result of the measurement to the demultiplexing unit 3055 and the higher layer processing unit 301.

The data demodulation/decoding unit 3051 decodes the uplink data from the complex-valued symbol of the uplink data input from the demultiplexing unit 3055. The data demodulation/decoding unit 3051 outputs the decoded uplink data to the higher layer processing unit 301.

Since a method for the data demodulation/decoding unit 3051 to decode the uplink data from the complex-valued symbol of the uplink data input from the demultiplexing unit 3055 corresponds to the operation of the coding unit 1071 included in the terminal apparatus 1, description thereof is omitted.

The control information demodulation/decoding unit 3053 decodes the uplink control information from the complex-valued symbol of the uplink control information input from the demultiplexing unit 3055. The control information demodulation/decoding unit 3053 outputs the decoded uplink control information to the higher layer processing unit 301.

The transmitter 307 generates the downlink reference signal in accordance with the control signal input from the controller 303, codes and modulates the downlink control information and the downlink data that are input from the higher layer processing unit 301, multiplexes PDCCH, PDSCH, and the downlink reference signal, and transmits a result of the multiplexing to the terminal apparatus 1 through the transmit and/or receive antenna 309.

The coding unit 3071 performs coding on the downlink control information and the downlink data input from the higher layer processing unit 301. The modulating unit 3073 modulates the coded bits input from the coding unit 3071, in compliance with a modulation scheme such as QPSK, 16 QAM, or 64 QAM.

The downlink reference signal generation unit 3079 generates a downlink reference signal. The multiplexing unit 3075 multiplexes the modulation symbol of each channel and the downlink reference signal.

The radio transmitting unit 3077 performs Inverse Fast Fourier Transform (IFFT) on the modulation symbol resulting from the multiplexing or the like, performs the modulation in compliance with an OFDM scheme, generates a digital signal in a baseband, converts the digital signal in the baseband into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency signal, removes unnecessary frequency components, performs power amplification, and outputs a final result to the transmit and/or receive antenna 309 for transmission.

The random access procedures will be described in detail below. The random access procedure includes a contention based random access procedure and a non-contention based random access procedure. The contention based random access procedure includes a 2 step contention based random access procedure and a 4 step contention based random access procedure. In other words, a type/form of the random access procedure may include the 2 step contention based, the 4 step contention based, and the non-contention based.

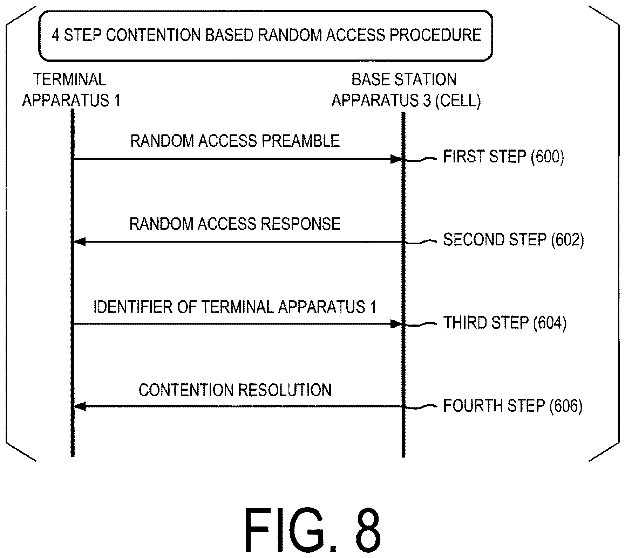

FIG. 8 is a diagram illustrating an example of the 4 step contention based random access procedure according to the present embodiment. The 4 step contention based random access procedure includes a first step (600), a second step (602), a third step (604), and a fourth step (606).

In the first step (600), the terminal apparatus 1 transmits a random access preamble. The random access preamble is included in the PRACH. In the first step (600), the MAC layer itself of the terminal apparatus 1 selects an index of the random access preamble. That is, in the first step (600), the base station apparatus 3 does not notify the terminal apparatus 1 of the index of the random access preamble.

In the second step (602), the terminal apparatus 1 receives a random access response. The random access response is included in the PDSCH. Here, the PDCCH for the RA-RNTI is used for scheduling of the PDSCH including the random access response. A value of the RA-RNTI may be given based on the PRACH resource used for transmission of the random access preamble in the first step (600). The random access response includes a random access preamble identifier indicating an index of the random access preamble, an uplink grant, information indicating the Temporary C-RNTI, and information indicating a timing advance. In a case that the random access response includes the random access preamble identifier corresponding to the random access preamble transmitted in the first step (600), the terminal apparatus 1 considers the random access response to have been successfully received.

In the third step (604), the terminal apparatus 1 transmits an identifier of the terminal apparatus 1. Here, the identifier of the terminal apparatus 1 may be the C-RNTI. The identifier of the terminal apparatus 1 or the C-RNTI is included in the PUSCH. Here, the PUSCH for the identifier of the terminal apparatus 1 or the C-RNTI is scheduled by the uplink grant included in the random access response.

In the fourth step (606), the terminal apparatus 1 receives a contention resolution. The contention resolution may be a UE contention resolution identifier or the C-RNTI. In a case that the terminal apparatus 1 has transmitted the C-RNTI in the PUSCH in the third step (604) and the terminal apparatus 1 receives the PDCCH for the C-RNTI, the terminal apparatus 1 may consider the contention resolution to be successful, and may consider the random access procedure to have been successfully completed.

Information indicating the UE contention resolution identifier is included in the PDSCH. Here, the PDCCH for the Temporary C-RNTI is used for scheduling of the PDSCH. In a case that (i) the terminal apparatus 1 has not transmitted the C-RNTI in the PUSCH of the third step (604), (ii) the terminal apparatus 1 has transmitted the identifier of the terminal apparatus 1 in the PUSCH of the third step (604), (iii) the terminal apparatus 1 has received the PDCCH for the Temporary C-RNTI, (iv) the PDSCH scheduled by the PDCCH includes the information indicating the UE contention resolution identifier, and (v) the UE contention resolution identifier and the identifier of the terminal apparatus 1 transmitted in the third step (604) match with each other, the terminal apparatus 1 may consider the contention resolution to be successful and the random access procedure to have been successfully completed.

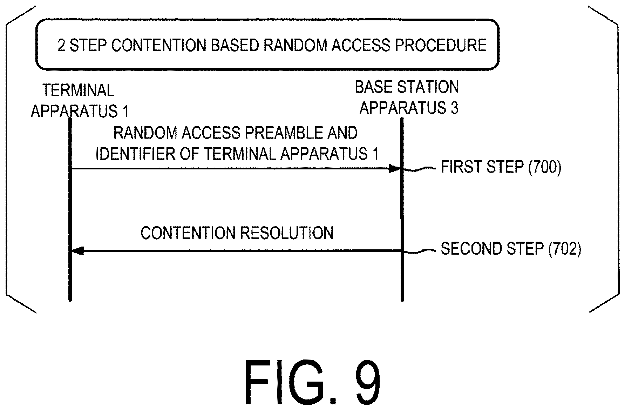

FIG. 9 is a diagram illustrating an example of the 2 step contention based random access procedure according to the present embodiment. The 2 step contention based random access procedure includes a first step (700) and a second step (702).

In the first step (700), the random access preamble and the identifier of the terminal apparatus 1 are transmitted. Here, the identifier of the terminal apparatus 1 may be the C-RNTI. The random access preamble may be included in the PRACH. The identifier of the terminal apparatus 1 may be included in the PUSCH. The random access preamble and the identifier of the terminal apparatus 1 may be included in the same one physical channel. In the first step (700), the MAC layer itself of the terminal apparatus 1 selects the index of the random access preamble. That is, in the first step (700), the base station apparatus 3 does not notify the terminal apparatus 1 of the index of the random access preamble.

In a case that an additional channel other than the PRACH is at least used for transmission of the identifier of the terminal apparatus 1 in the first step (700), the additional channel is also referred to as the PUSCH. In other words, the PUSCH may be a channel other than the PRACH that is at least used for transmission of the identifier of the terminal apparatus 1 in the first step (700).

In the 2 step contention based random access procedure, in a case that the additional channel other than the PRACH is at least used for transmission of the identifier of the terminal apparatus 1, the additional channel is also referred to as the PUSCH. In other words, in the 2 step contention based random access procedure, the PUSCH may be a channel other than the PRACH that is at least used for transmission of the identifier of the terminal apparatus 1.

In the second step (702), the terminal apparatus 1 receives a contention resolution. The contention resolution may be the UE contention resolution identifier or the C-RNTI. In a case that the terminal apparatus 1 has transmitted the C-RNTI in the first step (700) and the terminal apparatus 1 receives the PDCCH including the C-RNTI, the terminal apparatus 1 may consider the contention resolution to be successful, and may consider the random access procedure to have been successfully completed.

The UE contention resolution identifier is included in the PDSCH. Here, for scheduling of the PDSCH, the DCI format having the CRC scrambled with an X-RNTI added thereto may be used. The X-RNTI may be given based at least on a resource (PRACH resource) used for transmission of the random access preamble in the first step (700) and/or a resource (PUSCH resource) used for transmission of the identifier of the terminal apparatus 1. The X-RNTI may be the RA-RNTI.

In a case that (i) the terminal apparatus 1 has not transmitted the C-RNTI in the first step (700), (ii) the terminal apparatus 1 has transmitted the identifier of the terminal apparatus 1 in the first step (700), (iii) the terminal apparatus 1 receives the PDCCH for the X-RNTI, (iv) the PDSCH scheduled by the PDCCH includes the information indicating the UE contention resolution identifier, and (v) the UE contention resolution identifier and the identifier of the terminal apparatus 1 transmitted in the first step (700) match with each other, the terminal apparatus 1 may consider the contention resolution to be successful, and may consider the random access procedure to have been successfully completed. The PDSCH scheduled by the PDCCH for the X-RNTI may include some or all of the uplink grant, the information indicating the C-RNTI, and the information indicating the timing advance. The PDSCH scheduled by the PDCCH for the X-RNTI may not include information indicating the index of the random access preamble. Here, the terminal apparatus 1 may set the C-RNTI to a value of the information indicating the C-RNTI.

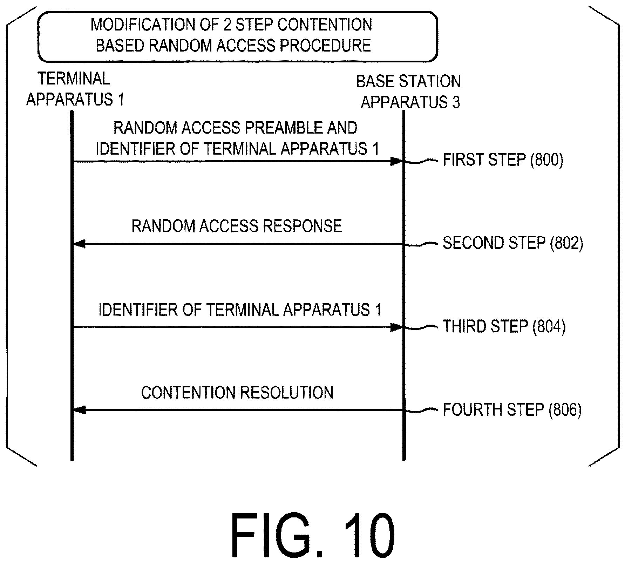

FIG. 10 is a diagram illustrating a modification of the 2 step contention based random access procedure according to the present embodiment. The modification of the 2 step contention based random access procedure includes a first step (800), a second step (802), a third step (804), and a fourth step (806). The first step (800) is the same as the first step (700). The second step (802) is the same as the second step (602). The third step (804) is the same as the third step (604). The fourth step (806) is the same as the fourth step (606). In other words, after the first step of the 2 step random access procedure, a transition from the 2 step contention based random access procedure to the 4 step contention based random access procedure may be performed.

In a case that the base station apparatus 3 detects the random access preamble and cannot detect the identifier of the terminal apparatus 1 in the first step (800), the base station apparatus 3 transmits the random access response in the second step (802). In other words, in a case that the base station apparatus 3 detects the random access preamble and cannot detect the identifier of the terminal apparatus 1 in the first step of the 2 step random access procedure, the second step of the 4 step random access procedure may be started by the base station apparatus 3. In a case that the base station apparatus 3 detects the random access preamble and the identifier of the terminal apparatus 1 in the first step of the 2 step random access procedure, the second step of the 2 step random access procedure may be started by the base station apparatus 3.

After the first step (700, 800) of the 2 step contention based random access procedure, the terminal apparatus 1 may monitor the contention resolution in the second step (702) and the random access response in the second step (802). In other words, in the second step (702, 802), the terminal apparatus 1 may monitor the PDCCH associated with the random access response and the PDCCH associated with the contention resolution. The PDCCH associated with the random access response may be the PDCCH for the RA-RNTI. The PDCCH associated with the contention resolution may be the PDCCH for the X-RNTI.

After the first step (600) of the 4 step contention based random access procedure, the terminal apparatus 1 may monitor the random access response of the second step (602). In other words, in the second step (602), the terminal apparatus 1 may monitor the PDCCH associated with the random access response. In the second step (602), the terminal apparatus 1 need not monitor the contention resolution. In other words, in the second step (602), the terminal apparatus 1 need not monitor the PDCCH associated with the contention resolution.

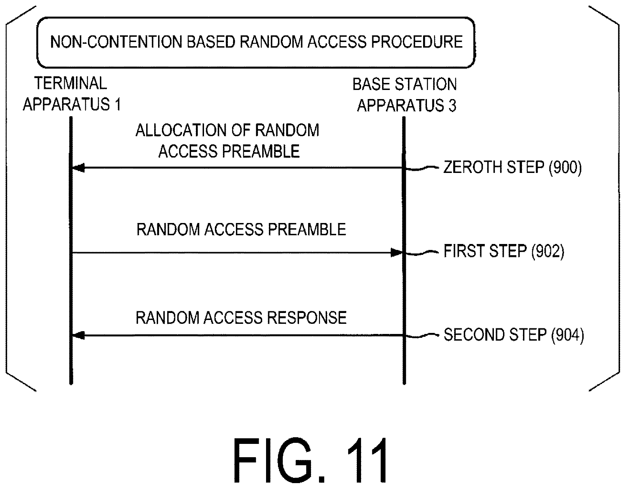

FIG. 11 is a diagram illustrating an example of the non-contention based random access procedure according to the present embodiment. The non-contention based random access procedure includes a zeroth step (900), a first step (902), and a second step (904).

In the zeroth step (900), the terminal apparatus 1 receives an allocation of the random access preamble. The allocation of the random access preamble may be included in a handover command or the PDCCH for the C-RNTI. The allocation of the random access preamble may indicate the index of the random access preamble. The PDCCH including the allocation of the random access preamble is also referred to as a PDCCH order or a PDCCH order indicating start of the random access procedure.

In the first step (902), the terminal apparatus 1 selects the random access preamble based on the allocation of the random access preamble, and transmits the selected random access preamble. The random access preamble is included in the PRACH. In the first step (902), the MAC layer itself of the terminal apparatus 1 does not select the index of the random access preamble.

In the second step (904), the terminal apparatus 1 receives the random access response. The random access response is included in the PDSCH. Here, the PDCCH for the RA-RNTI is used for scheduling of the PDSCH including the random access response. The value of the RA-RNTI may be given based on the PRACH resource used for transmission of the random access preamble in the first step (900). The random access response includes the random access preamble identifier indicating the index of the random access preamble, the uplink grant, the information indicating the Temporary C-RNTI, and the information indicating the timing advance. In a case that the random access response includes the random access preamble identifier corresponding to the random access preamble transmitted in the first step (900), the random access response is considered to be successfully received. In a case that the random access response includes the random access preamble identifier corresponding to the random access preamble transmitted in the first step (900), notification of the allocation of the random access preamble is performed, and the index of the random access preamble is not selected by the MAC itself of the terminal apparatus 1, the terminal apparatus 1 considers the random access procedure to have been successfully completed.

In the zeroth step (900), in a case that the allocation of the random access preamble indicates a first prescribed value, the terminal apparatus 1 may start the 4 step contention based random access procedure. In other words, a case that the MAC itself of the terminal apparatus 1 does not select the index of the random access preamble may be a case that the allocation of the random access preamble is not the first prescribed value.

In the zeroth step (900), in a case that the allocation of the random access preamble indicates a second prescribed value, the terminal apparatus 1 may start the 2 step contention based random access procedure. In other words, a case where the MAC itself of the terminal apparatus 1 does not select the index of the random access preamble may be a case where the allocation of the random access preamble is different from both the first prescribed value and the second prescribed value.

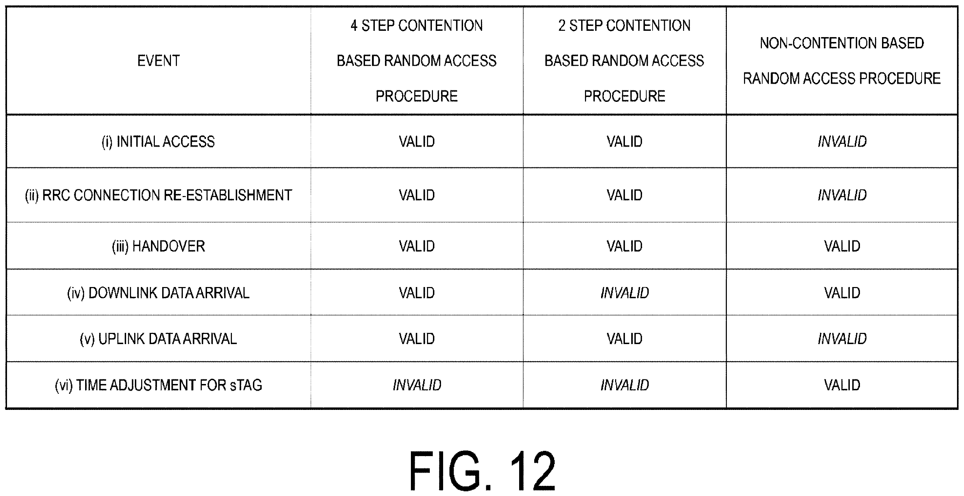

FIG. 12 is a diagram illustrating an example of a correspondence between an event and a form of the random access procedure according to the present embodiment. The random access procedure is performed for (event i) initial access from RRC_IDLE, (event ii) RRC connection re-establishment, (event iii) handover, (event iv) downlink data arrival during RRC_CONNECTED, (event v) uplink data arrival during RRC_CONNECTED, and (event vi) time adjustment for secondary TAG. The random access procedure for (event iv) downlink data arrival during RRC_CONNECTED may be performed in a case that a status of the uplink synchronization is asynchronous. The random access procedure for (event v) uplink data arrival during RRC_CONNECTED may be performed in a case that the status of the uplink synchronization is asynchronous, or in a case that there is no PUCCH resource for a scheduling request.

The random access procedure relating to the event i through the event v may be performed on the primary cell. The first step in the random access procedure relating to the event vi may be performed on the secondary cell. In other words, the random access procedure performed for (event vi) time adjustment for secondary TAG is started in the secondary cell belonging to the secondary TAG.

The random access procedure for (event i) initial access from RRC_IDLE may include the 4 step contention based random access procedure and the 2 step contention based random access procedure. The random access procedure for (event i) initial access from RRC_IDLE may not include the non-contention based random access procedure. The random access procedure for (event i) initial access from RRC_IDLE may be started by the RRC.

The random access procedure for (event ii) RRC connection re-establishment may include the 4 step contention based random access procedure and the 2 step contention based random access procedure. The random access procedure for (event ii) RRC connection re-establishment may not include the non-contention based random access procedure. The random access procedure for (event ii) RRC connection re-establishment may be started by the RRC.

The fact that the random access procedure includes the 4 step contention based random access procedure may be that the 4 step contention based random access procedure is supported, the 4 step contention based random access procedure is enabled, or the 4 step contention based random access procedure is applicable. The same applies to the 2 step contention based random access procedure and the non-contention based random access procedure.

The system information transmitted/broadcast by the base station apparatus 3 (cell) may include PRACH information and random access information. The PRACH information may include information indicating the PRACH resource, information relating to the physical root sequence index u relating to the random access preamble, and information relating to the cyclic shift $C_v$ for the random access preamble. The physical root sequence index u and the cyclic shift $C_v$ are used to determine the sequence of the random access preamble. The random access information may include information indicating the number of random access preambles and information indicating the number of random access preambles for the contention based random access procedure. Furthermore, the system information may include information for the 2 step contention based random access procedure. The information for the 2 step contention based random access procedure may include information indicating that the 2 step contention based random access procedure is supported in the cell, information indicating a resource for transmission of the identifier of the terminal apparatus 1 in the first step of the 2 step contention based random access procedure, information indicating a modulation scheme for data including the identifier of the terminal apparatus 1 in the first step of the 2 step contention based random access procedure, and/or information indicating a threshold of Reference Signal Received Power (RSRP). Here, the system information does not include the allocation of the random access preamble for the zeroth step of the non-contention based random access procedure.

The terminal apparatus 1 measures the RSRP from the downlink reference signal of the cell. The terminal apparatus 1 may start any one of the 2 step contention based random access procedure and the 4 step contention based random access procedure, based on the measured RSRP and the threshold of the RSRP. In a case that the measured RSRP does not exceed the threshold of the RSRP, the terminal apparatus 1 may start the 4 step contention based random access procedure. In a case that the measured RSRP exceeds the threshold of the RSRP, the terminal apparatus 1 may start the 2 step contention based random access procedure.

The random access procedure for (event iii) handover may include the 4 step contention based random access procedure, the 2 step contention based random access procedure, and the non-contention based random access procedure. The handover command may include the above-described PRACH information, the above-described random access information, the above-described information for the 2 step contention based random access procedure, and/or the allocation of the random access preamble for the zeroth step of the non-contention based random access procedure.

The terminal apparatus 1 may start, based on the information included in the handover command, any one of the 4 step contention based random access procedure, the 2 step contention based random access procedure, and the non-contention based random access procedure.

In a case that the handover command includes the allocation of the random access preamble, the terminal apparatus 1 may start the non-contention based random access procedure.

In a case that the handover command does not include the allocation of the random access preamble and the handover command includes the information for the 2 step contention based random access procedure, the terminal apparatus 1 may start, based on the measured RSRP and the threshold of the RSRP, any one of the 2 step contention based random access procedure and the 4 step contention based random access procedure.

In a case that the handover command does not include the allocation of the random access preamble and the handover command includes the information for the 2 step contention based random access procedure, the terminal apparatus 1 may start, based on the measured RSRP and the threshold of the RSRP, any one of the 2 step contention based random access procedure and the 4 step contention based random access procedure. Here, in a case that the measured RSRP does not exceed the threshold of the RSRP, the terminal apparatus 1 may start the 4 step contention based random access procedure. Here, in a case that the measured RSRP exceeds the threshold of the RSRP, the terminal apparatus 1 may start the 2 step contention based random access procedure.

In a case that the handover command includes the allocation of the random access preamble and the allocation of the random access preamble indicates the first prescribed value, the terminal apparatus 1 may start the 4 step contention based random access procedure.

In a case that the handover command includes the allocation of the random access preamble, the allocation of the random access preamble indicates the second prescribed value, and the handover command includes the information for the 2 step contention based random access procedure, the terminal apparatus 1 may start the 2 step contention based random access procedure.

In a case that the handover command does not include the allocation of the random access preamble and the handover command does not include the information for the 2 step contention based random access procedure, the terminal apparatus 1 may start the 4 step contention based random access procedure.

The random access procedure for (event iv) downlink data arrival during RRC_CONNECTED may include the 4 step contention based random access procedure and the non-contention based random access procedure. The random access procedure for (event iv) downlink data arrival during RRC_CONNECTED may not include the 2 step contention based random access procedure. The random access procedure for (event iv) downlink data arrival during RRC_CONNECTED is started by the PDCCH order.

In a case that the allocation of the random access preamble included in the PDCCH order is a value other than the first prescribed value, the terminal apparatus 1 may start the non-contention based random access procedure. In a case that the allocation of the random access preamble included in the PDCCH order is the first prescribed value, the terminal apparatus 1 may start the 4 step contention based random access procedure. Even in a case that the allocation of the random access preamble included in the PDCCH order is the second prescribed value, the terminal apparatus 1 may start the 4 step contention based random access procedure.

The random access procedure for (event v) uplink data arrival during RRC_CONNECTED may include the 4 step contention based random access procedure and the 2 step contention based random access procedure. The random access procedure for (event v) uplink data arrival during RRC_CONNECTED may not include the non-contention based random access procedure. The random access procedure for (event v) uplink data arrival during RRC_CONNECTED is started by the MAC itself.

The random access procedure performed for (event vi) time adjustment for secondary TAG is started by the PDCCH order. In other words, the allocation of the random access preamble included in the PDCCH order indicating the start of the random access procedure in the secondary cell indicates a value other than the first prescribed value.

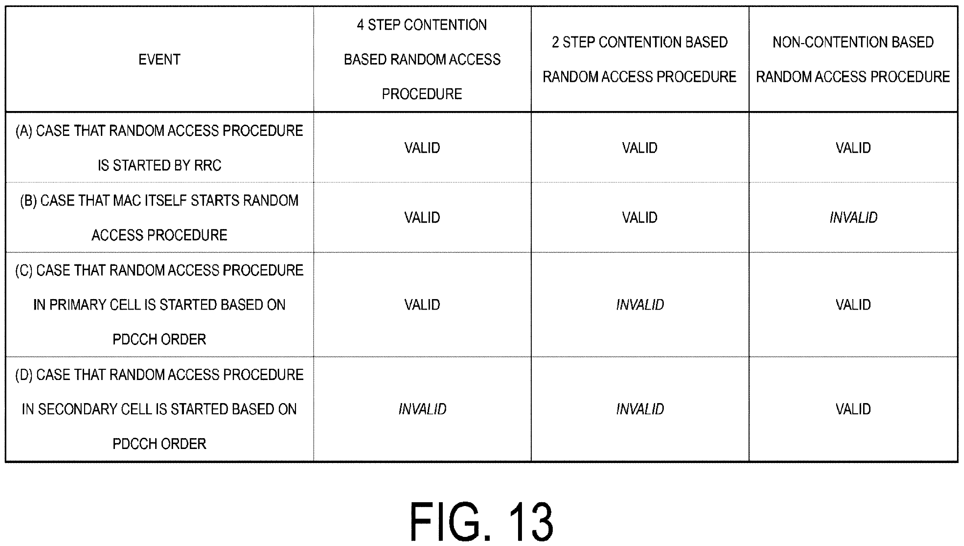

FIG. 13 is a diagram illustrating another example of the correspondence between the event and the form of the random access procedure according to the present embodiment. The random access procedure is started by (event A) RRC, (event B) MAC itself, or (event C) PDCCH order.

The random access procedure started by (event A) RRC may include the 4 step contention based random access procedure, the 2 step contention based random access procedure, and the non-contention based random access procedure.

The random access procedure started by (event B) MAC itself may include the 4 step contention based random access procedure and the 2 step contention based random access procedure. The random access procedure started by (event B) MAC itself may not include the non-contention based random access procedure.

The random access procedure started by the PDCCH order may include the 4 step contention based random access procedure and the non-contention based random access procedure. The random access procedure started by the PDCCH order may not include the 2 step contention based random access procedure.

The random access procedure started in the primary cell based on (event C) PDCCH order may include the 4 step contention based random access procedure and the non-contention based random access procedure. The random access procedure started in the primary cell based on (event C) PDCCH order may not include the 2 step contention based random access procedure.

The random access procedure started in the secondary cell based on (event D) PDCCH order may include the non-contention based random access procedure. The random access procedure started in the secondary cell based on (event D) PDCCH order may not include the 4 step contention based random access procedure and the 2 step contention based random access procedure.

A calculation method of the number of SC-FDMA symbols $N^{PUSCH\text{-}initial}_{symb}$ for the PUSCH initial transmission in the coding unit 1071 included in the terminal apparatus 1 is described.

The number of SC-FDMA symbols $N^{PUSCH\text{-}initial}_{symb}$ for the PUSCH initial transmission may be given based on Equation (3) described below.

Equation 3

$$N^{PUSCH\text{-}initial}_{symb} = (2(N^{UL}_{symb}-1)-N_{SRS}-N^{PUSCH}_{start}-N^{PUSCH}_{end})$$

Here, the first value $N^{PUSCH}_{end}$ may be a variable taking a value of 0 or a value greater than or equal to 1. Furthermore, the second value $N_{SRS}$ may be a variable taking a value of 0 or 1. Furthermore, the third value $N^{PUSCH}_{start}$ may be a variable taking a value of 0 or 1. Furthermore, the fourth value $N^{UL}_{symb}$ is the number of SC-FDMA symbols per slot. Here, the first value $N^{PUSCH}_{end}$ may be a first value $N^{PUSCH}_{end}$ corresponding to the PUSCH. The second value $N_{SRS}$ may also be a second value $N_{SRS}$ corresponding to the PUSCH. The third value $N^{PUSCH}_{start}$ may also be a third value $N^{PUSCH}_{start}$ corresponding to the PUSCH. The fourth value $N^{UL}_{symb}$ may also be a fourth value $N^{UL}_{symb}$ corresponding to the PUSCH.

Here, the number of SC-FDMA symbols $N^{PUSCH\text{-}initial}_{symb}$ for the PUSCH initial transmission may be given based at least on the first value $N^{PUSCH}_{end}$. Additionally, the number of SC-FDMA symbols $N^{PUSCH\text{-}initial}_{symb}$ for the PUSCH initial transmission may be associated at least with the first value $N^{PUSCH}_{end}$.

For example, under a condition (A1), the first value $N^{PUSCH}_{end}$ may be a value of 1 or a value greater than or equal to 1. Furthermore, under a condition (A2), the first value $N^{PUSCH}_{end}$ may be 1. Furthermore, under a condition (A3), the first value $N^{PUSCH}_{end}$ may be 0.

Here, the condition (A1) may include that the PUSCH is transmitted in the first step (700). Additionally, a first PUSCH transmission may include that the PUSCH is transmitted in the first step (800).

Furthermore, the condition (A1) may include that the PUSCH is transmitted in the 2 step contention based random access procedure. That is, the condition (A1) may include that the PRACH triggers the PUSCH transmission. The condition (A1) may also include that the PRACH and the PUSCH are simultaneously transmitted. The condition (A1) may also include that the PUSCH is transmitted at the same transmission timing as that of the PRACH. The condition (A1) may also include that the PUSCH is transmitted at the same frequency resource (resource block index) as that of the PRACH. The condition (A1) may also include that the PUSCH is transmitted based at least on the transmission timing of the PRACH.

The condition (A1) may also include that the PUSCH transmission is not triggered by the signal received from the base station apparatus 3 (downlink control information and/or higher layer signaling). The condition (A1) may include PUSCH transmission other than the PUSCH transmission triggered by the signal received from the base station apparatus 3 (downlink control information and/or higher layer signaling). In other words, the condition (A1) may include that the PUSCH transmission is triggered by the terminal apparatus 1 itself (or the MAC layer of the terminal apparatus 1 or the higher layer of the terminal apparatus 1). Furthermore, the condition (A1) may include that the PUSCH is transmitted without the uplink grant (grant-free). In other words, the condition (A1) may include that the PUSCH is transmitted irrespective of the uplink grant received from the base station apparatus 3.

Furthermore, the condition (A1) may include that the PUSCH is transmitted without being based on an uplink transmission timing.

Furthermore, the condition (A1) may include that the PUSCH is transmitted based on a downlink transmission timing. Here, the fact that the PUSCH is transmitted based on the downlink transmission timing may be that the PUSCH is transmitted based on a transmission timing given based at least on $N_{TA} = 0$. Here, the PUSCH transmission timing is given by $(N_{TA} + N_{TA, offset}) * T_s$. In other words, the PUSCH transmission timing is given by a timing obtained by moving forward by $(N_{TA} + N_{TA, offset}) * T_s$ from the start time point of the downlink subframe. Here, $N_{TA, offset}$ is 0 in the frame structure type 1. Additionally, $N_{TA, offset}$ is 624 in the frame structure type 2. $N_{TA, offset}$ is 624 in the frame structure type 3.

Furthermore, the condition (A1) may include that the PUSCH is transmitted in a case that the terminal apparatus 1 does not have a valid transmission timing value (TA value).

In other words, the condition (A1) may be to satisfy at least some or all of a condition (a1) to a condition (a6). Condition (a1): the PUSCH being transmitted in the first step (700), condition (a2): the PUSCH being transmitted in the 2 step contention based random access procedure, condition (a3): the PUSCH which is not triggered by the signal received from the base station apparatus 3 (downlink control information and/or higher layer signaling) being transmitted, condition (a4): the PUSCH which is not based on the uplink transmission timing being transmitted, condition (a5): the PUSCH based on the downlink transmission timing being transmitted, condition (a6): the PUSCH being transmitted in the case that the terminal apparatus 1 does not have the valid transmission timing value (TA value)

Here, the condition (a1) may be that the PUSCH is transmitted in the first step (800).

Furthermore, the condition (a2) may be that the PUSCH triggered by PRACH is transmitted. The condition (a2) may also be that the PRACH and the PUSCH are simultaneously transmitted. The condition (a2) may also be that the PUSCH is transmitted at the same transmission timing as that of the PRACH. The condition (a2) may also be that the PUSCH is transmitted at the same frequency resource (resource block index) as that of the PRACH. The condition (a2) may also be that the PUSCH is transmitted based at least on the transmission timing of the PRACH.

Furthermore, the condition (a3) may be that the PUSCH transmission is triggered by the terminal apparatus 1 itself. Furthermore, the condition (a3) may be that the PUSCH is transmitted without the uplink grant (grant-free).

Furthermore, the condition (A2) may include that the PUSCH is transmitted in the LAA cell, the PUSCH is configured to be transmitted up to the second SC-FDMA symbol from the last of the subframe, and the second value $N_{SRS}$ corresponding to the PUSCH is 0. Furthermore, the condition (A2) may include that the uplink transmission is configured to be performed in the LAA cell for the terminal apparatus 1, the PUSCH is configured to be transmitted up to the second SC-FDMA symbol from the last of the subframe, and the second value $N_{SRS}$ corresponding to the PUSCH is 0. The fact that the PUSCH is transmitted up to the second SC-FDMA symbol from the last of the subframe means that the PUSCH is not transmitted at least at the last one SC-FDMA symbol of the subframe. The expression "up to the second SC-FDMA symbol from the last of the subframe" includes the second SC-FDMA symbol from the last of the subframe. Additionally, the uplink transmission may be transmission of the PUSCH.

The condition (A2) may be to satisfy at least a condition (a7), and not to satisfy at least some or all of the condition (a1) to the condition (a6). Condition (a7): the PUSCH being transmitted in the LAA cell, the PUSCH being configured to be transmitted up to the second SC-FDMA symbol from the last of the subframe, and the second value $N_{SRS}$ corresponding to the PUSCH being 0

Here, the condition (a7) may be that the uplink transmission is configured to be performed in the LAA cell for the terminal apparatus 1, the PUSCH is configured to be transmitted up to the second SC-FDMA symbol from the last of the subframe, and the second value $N_{SRS}$ corresponding to the PUSCH is 0.

For example, the condition (A2) may be to satisfy the condition (a7) and not to satisfy the condition (a1). That is, the condition (A2) may be that the PUSCH is transmitted in the LAA cell, the PUSCH is transmitted up to the second SC-FDMA symbol from the last of the subframe, the second value $N_{SRS}$ corresponding to the PUSCH is 0, and the PUSCH is transmitted in a step other than the first step (700). Furthermore, the condition (A2) may be to satisfy the condition (a7) and not to satisfy the condition (a2). Furthermore, the condition (A2) may be to satisfy the condition (a7) and not to satisfy the condition (a1) and the condition (a2). The same applies to other conditions, and thus description thereof will be omitted.

Furthermore, the condition (A2) may be to satisfy at least some or all of a condition (a8) and a condition (a9). Condition (a8): the PUSCH being transmitted in the third step (604), condition (a9): the PUSCH being transmitted in the 4 step contention based random access procedure

Here, the condition (a8) may be that the PUSCH is transmitted in the third step (804).

Additionally, the condition (a9) may be that the PUSCH transmission is triggered by the uplink grant included in the random access response (random access response grant).

In other words, the condition (A2) may be to satisfy at least some or all of the condition (a7) to the condition (a9) and not to satisfy at least some or all of the condition (a1) to the condition (a6). For example, the condition (A2) may satisfy the condition (a7) and the condition (a8), and may not satisfy the condition (a1). Furthermore, the condition (A2) may satisfy the condition (a7) and the condition (a9), and may not satisfy the condition (a3). The same applies to other conditions, and thus description thereof will be omitted.

The condition (A3) may be that the condition (A1) and/or the condition (A2) is not satisfied.

Additionally, the condition (A3) may be that at least some or all of the condition (a1) to the condition (a6) are not satisfied, and the condition (a7) is not satisfied. For example, the condition (A3) may be that the condition (a1) is not satisfied, and furthermore, the condition (a7) is not satisfied. In other words, the condition (A3) may be that (i) the PUSCH is transmitted in a step other than the first step (700), and (ii) the uplink transmission is configured to be performed in a cell other than the LAA cell for the terminal apparatus 1, the PUSCH is not configured to be transmitted up to the last second SC-FDMA symbol of the subframe for the terminal apparatus 1, or the second value $N_{SRS}$ corresponding to the PUSCH is not 0. The same applies to other conditions, and thus description thereof will be omitted. Here, the fact that the PUSCH is not configured to be transmitted up to the last second SC-FDMA symbol of the subframe for the terminal apparatus 1 may be that the PUSCH is configured to be transmitted up to the last SC-FDMA symbol of the subframe for the terminal apparatus 1.

Additionally, the condition (A3) may be not to satisfy at least some or all of the condition (a1) to the condition (a6), not to satisfy the condition (a7), and to satisfy some or all of the condition (a8) and the condition (a9). For example, the condition (A3) may not satisfy the condition (a1), may further not satisfy the condition (a7), and may satisfy the condition (a8). In other words, the condition (A3) may be that (i) the PUSCH is transmitted in a step other than the first step (700), (ii) the uplink transmission is configured to be performed in a cell other than the LAA cell for the terminal apparatus 1, the PUSCH is not configured to be transmitted up to the last second SC-FDMA symbol of the subframe for the terminal apparatus 1, or the second value $N_{SRS}$ is not 0, and (iii) the PUSCH is transmitted in the third step (604). The same applies to other conditions, and thus description thereof will be omitted.

The number of SC-FDMA symbols $N^{PUSCH-initial}_{symb}$ for the PUSCH initial transmission may be given based at least on the second value $N_{SRS}$ in addition to the first value $N^{PUSCH}_{end}$. Here, the second value $N_{SRS}$ is 1 in a case that a prescribed condition is at least satisfied. The prescribed condition may include some or all of a condition (a10) to a condition (a14). For example, the prescribed condition may be to satisfy the condition (a10). Furthermore, the prescribed condition may be to satisfy the condition (a11). Furthermore, the prescribed condition may be to satisfy the condition (a12). Furthermore, the prescribed condition may be to satisfy the condition (a13). Furthermore, the prescribed condition may be to satisfy the condition (a14). Furthermore, the prescribed condition may be to satisfy the condition (a10) and the condition (a11). The same applies to other conditions, and thus description thereof will be omitted. Condition (a10): one uplink cell (UL cell) being configured for the terminal apparatus 1 and the PUSCH initial transmission and the SRS transmission being configured to the same subframe (UE configured with one UL cell is configured to send PUSCH and SRS in the same subframe for initial transmission), condition (a11): the PUSCH initial transmission and the SRS transmission being performed in the same subframe of the same serving cell (in a case that UE transmits PUSCH and SRS in the same subframe in the same serving cell for initial transmission), condition (a12): a band for the PUSCH initial transmission (resource or frequency resource) at least partially overlapping with a band configured for a cell-specific SRS (the PUSCH resource allocation for initial transmission even partially overlaps with the cell-specific SRS subframe and bandwidth configuration), condition (a13): a first UE-specific SRS being configured in the subframe for the PUSCH initial transmission (the subframe for initial transmission in the same serving cell is a UE-specific type-1 SRS subframe), and condition (a14): a second UE-specific SRS being configured in the subframe for the PUSCH initial transmission, and multiple TAG being configured for the terminal apparatus 1 (the subframe for initial transmission in the same serving cell is a UE-specific type-0 SRS subframe and the UE is configured with multiple TAGs)

In the condition (a12), the cell-specific SRS band is given based on information included in the higher layer signaling. Additionally, the subframe of the cell-specific SRS is given based on the information included in the higher layer signaling.

In the condition (a13), the first UE-specific SRS is configured for the SRS that is transmitted non-periodically. Additionally, the subframe of the first UE-specific SRS is given based on the information included in the higher layer signaling. The SRS that is transmitted non-periodically is triggered by the information included in the downlink control information.

In the condition (a14), the second UE-specific SRS is configured for the SRS that is transmitted periodically. Additionally, the subframe of the second UE-specific SRS is given based on the information included in the higher layer signaling.

In addition, the second value $N_{SRS}$ corresponding to the PUSCH is 0 in a case that all of the condition (a10) to the condition (a14) are not at least satisfied.

The number of SC-FDMA symbols $N^{PUSCH-initial}_{symb}$ for the PUSCH initial transmission may be given based at least on the third value $N^{PUSCH}_{start}$ in addition to the first value $N^{PUSCH}_{end}$ and the second value $N_{SRS}$. Here, the third value $N^{PUSCH}_{start}$ is 1 in a case that it is configured to transmit the PUSCH in the LAA cell to the terminal apparatus 1, and that it is indicated that the PUSCH transmission is not started from the head of the first SC-FDMA symbol (e.g., SC-FDMA symbol #0). Furthermore, the third value $N^{PUSCH}_{start}$ is 0 in the other cases. In other words, the third value $N^{PUSCH}_{start}$ is 0 in the case that the PUSCH transmission is not configured to the LAA cell or that it is not indicated that the PUSCH transmission is not started from the first SC-FDMA symbol.

The number of SC-FDMA symbols $N^{PUSCH-initial}_{symb}$ for the PUSCH initial transmission may be given based at least on the fourth value $N^{UL}_{symb}$ in addition to the first value $N^{PUSCH}_{end}$, the second value $N_{SRS}$, and the third value $N^{PUSCH}_{start}$.

In the condition (A1), the first value $N^{PUSCH}_{end}$ may be given based at least on the format of the random access preamble. For example, in the condition (A1), the first value $N^{PUSCH}_{end}$ may be given for each format of the random access preamble. Additionally, in the condition (A1), the first value $N^{PUSCH}_{end}$ may be given based at least on the higher layer signaling.

In the condition (A1), the first value $N^{PUSCH}_{end}$ may be given based at least on a value $T_{PRACH}$ associated with a length of the format of the random access preamble. Furthermore, the first value $N^{PUSCH}_{end}$ may be given such that the length of the PUSCH is equal to or less than the length of the format of the random access preamble. For example, the first value $N^{PUSCH}_{end}$ may be configured to be the maximum $N^{PUSCH-initial}_{symb}$ that satisfies $N^{PUSCH-initial}_{symb} * T_{symb} < T_{PRACH}$. Here, $T_{symb}$ is a length of the SC-FDMA symbol included in the PUSCH. Additionally, the length of the PUSCH is given based at least on the length of the SC-FDMA symbol included in the PUSCH. The value $T_{PRACH}$ associated with the length of the format of the random access preamble may be a length $T_{PRACH0}$ of the format of the random access preamble. In other words, the value $T_{PRACH}$ associated with the length of the format of the random access preamble may satisfy $T_{PRACH} = T_{PRACH0}$. The length $T_{PRACH0}$ of the format of the random access preamble may vary based on the format of the random access preamble. For example, the length $T_{PRACH0}$ of the format of the random access preamble is 27744 * $T_s$ in a preamble format 0. Furthermore, for example, $T_{PRACH0}$ is 45600 * $T_s$ in a preamble format 1. Furthermore, for example, $T_{PRACH0}$ is 55392 * $T_s$ in a preamble format 2. Furthermore, for example, $T_{PRACH0}$ is 70176 * $T_s$ in a preamble format 3. Furthermore, for example, $T_{PRACH0}$ is 4544 * $T_s$ in a preamble format 4.

In a case that the length of the format of the random access preamble spans $N_{sub}$ subframes, $T_{PRACH}$ may be given by $T_{PRACH0}$ - ($N_{sub}$ - 1) * $T_{subframe}$. For example, for a random access preamble format configured over two subframes, $T_{PRACH}$ may be given by $T_{PRACH} = T_{PRACH0}$ - $T_{subframe}$. Here, $T_{subframe}$ is the length of the subframe, and is, for example, 1 ms.

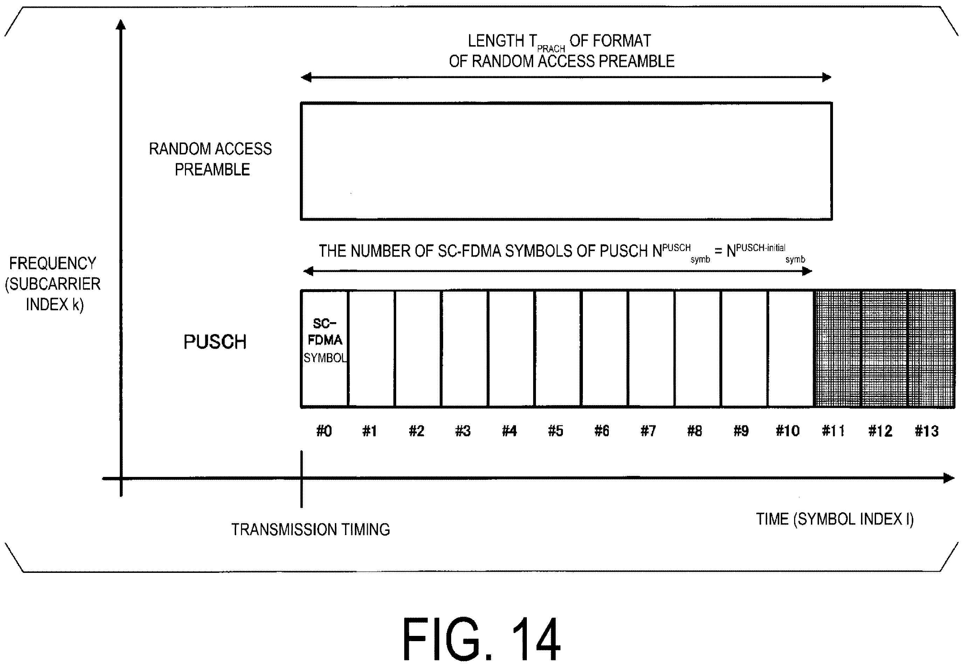

FIG. 14 is a diagram illustrating an example of a determination method for the first value $N^{PUSCH}_{end}$ according to the present embodiment. In FIG. 14, the vertical axis represents the frequency and the horizontal axis represents the time. Furthermore, in FIG. 14, an example is illustrated in which the random access preamble having the format length of $T_{PRACH}$ and the PUSCH including 14 SC-FDMA symbols are simultaneously transmitted (subjected to frequency division multiplexing) at a certain transmission timing. Note that in the various aspects according to the present embodiment, the random access preamble and the PUSCH may be subjected to time division multiplexing.

In the example illustrated in FIG. 14, the maximum $N^{PUSCH\text{-}initial}_{symb}$ is 11 in a condition of being less than the length $T_{PRACH}$ of the format of the random access preamble. For example, in a case that $N^{PUSCH\text{-}initial}_{symb}$ is given based on Equation (3), the second value $N_{SRS}$ and the third value $N^{PUSCH}_{start}$ are 0, and the fourth value $N^{UL}_{symb}$ is 7, $N^{PUSCH}_{end}$ is 3. In other words, in the example illustrated in FIG. 14, the last three SC-FDMA symbols of the subframe are not transmitted (corresponding to SC-FDMA symbols #11 to #13 indicated by the grid pattern). As a result, in a case that uplink time synchronization is not achieved, as in a case of initial access or the like, the terminal apparatus 1 is preferable for avoiding inter-symbol interference and the like by the PUSCH.

Furthermore, the first value $N^{PUSCH}_{end}$ may be given such that the length of the PUSCH is greater than the length of the format of the random access preamble. For example, the first value $N^{PUSCH}_{end}$ may be configured to be the minimum $N^{PUSCH\text{-}initial}_{symb}$ that satisfies $N^{PUSCH\text{-}initial}_{symb}$ * $T_{symb}$ > $T_{PRACH}$.

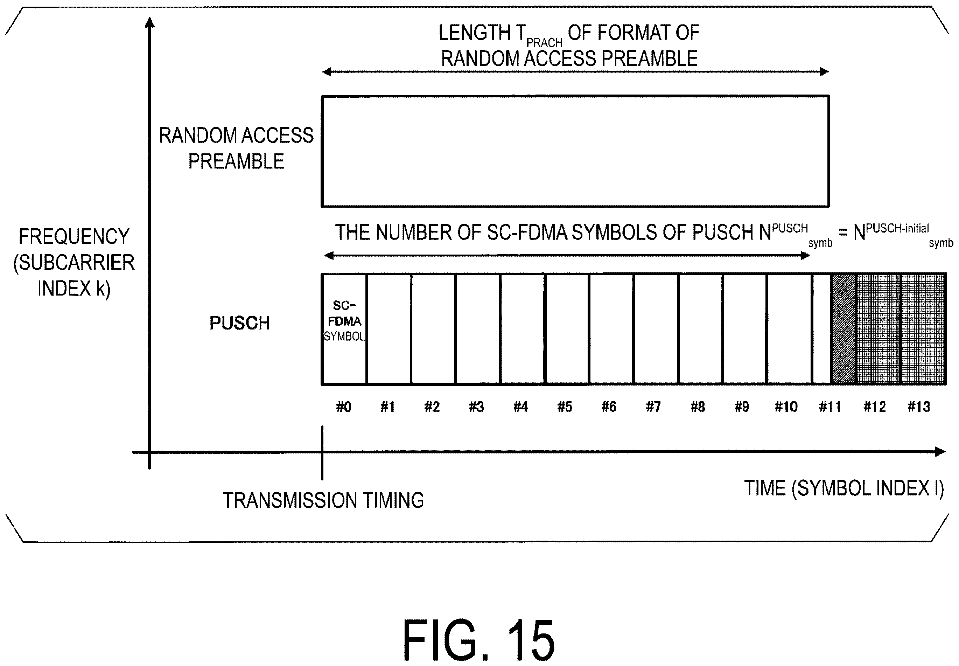

FIG. 15 is a diagram illustrating an example of the determination method for the first value $N^{PUSCH}_{end}$ according to the present embodiment. In FIG. 15, the vertical axis represents the frequency and the horizontal axis represents the time. Furthermore, in FIG. 15, an example is illustrated in which the random access preamble having the length of $T_{PRACH}$ and the PUSCH including 14 SC-FDMA symbols are simultaneously transmitted (subjected to frequency division multiplexing) at a certain transmission timing. Note that in the various aspects according to the present embodiment, the random access preamble and the PUSCH may be subjected to time division multiplexing.

In the example illustrated in FIG. 15, the minimum $N^{PUSCH\text{-}initial}_{symb}$ is 12 in a condition of being greater than the length $T_{PRACH}$ of the format of the random access preamble. For example, in a case that $N^{PUSCH\text{-}initial}_{symb}$ is given based on Equation (3), the second value $N_{SRS}$ and the third value $N^{PUSCH}_{start}$ are 0, and the fourth value $N^{UL}_{symb}$ is 7, $N^{PUSCH}_{end}$ is 2. In other words, in the example illustrated in FIG. 15, the last two SC-FDMA symbols of the subframe are not transmitted (corresponding to SC-FDMA symbols #12 to #13 indicated by the grid lines). Furthermore, part of the SC-FDMA symbol #11 exceeds the range of the random access preamble (indicated by the diagonal lines). In this case, a Patial symbol is preferably applied to the SC-FDMA symbol #11. The partial symbol is preferably configured so as not to exceed the length of the random access preamble.

For example, in the condition (A1), the last SC-FDMA symbol of the subframe transmitted in the PUSCH may be the partial symbol. Here, the last SC-FDMA symbol of the subframe transmitted in the PUSCH may be a $N^{PUSCH\text{-}initial}_{symb}$-th SC-FDMA symbol from the head SC-FDMA symbol of the PUSCH. Furthermore, in a case that the third value $N^{PUSCH}_{start}$ is 0, the last SC-FDMA symbol of the subframe transmitted in the PUSCH may be the $N^{PUSCH\text{-}initial}_{symb}$-th SC-FDMA symbol from the head SC-FDMA symbol of the PUSCH. Furthermore, in a case that the third value $N^{PUSCH}_{start}$ is 1, the last SC-FDMA symbol of the subframe transmitted in the PUSCH may be a $N^{PUSCH\text{-}initial}_{symb}$-th SC-FDMA symbol from the second SC-FDMA symbol from the head of the PUSCH. In other words, in the condition (A1), the partial symbol may be configured for at least some of the SC-FDMA symbols included in the PUSCH, and the SC-FDMA symbols for which the partial symbol is configured may be given based at least on the value of $N^{PUSCH\text{-}initial}_{symb}$.

Here, the partial symbol may be that at least part of time continuous signals is 0. The time continuous signal is given by Equation (4) described below.

Equation 4

$$s_l^{(p)}(t) = \sum_{k=-\left\lfloor N_{RB}^{UL} N_{sc}^{RB}/2 \right\rfloor}^{\left\lceil N_{RB}^{UL} N_{sc}^{RB}/2 \right\rceil} a_{k^{(-)},l}^{(p)} \cdot e^{j2\pi(k+1/2)\Delta f(t-N_{CP,l}T_s)}$$

Here, $s^{(p)}{}_l$ (t) is a time continuous signal, which is generated based on a content corresponding to the SC-FDMA symbol l, at a time t of the SC-FDMA symbol l, at an antenna port p. Furthermore, the $N^{UL}{}_{RB}$ is the number of resource blocks in the uplink band, $N^{RB}{}_{sc}$ is the number of subcarriers of the resource block, ceil() is a ceiling function, floor() is a floor function, $a^{(p)}{}_k{}^{(-)}{}_l$ is a content of the resource element (k, l) at the antenna port p, and l is an index of the SC-FDMA symbol. Additionally, $\Delta f$ = 15 kHz. Additionally, $N_{CP,l}$ is a CP length of the SC-FDMA symbol 1. Additionally, $T_s$ = 1/(15000 * 2048) is satisfied. Additionally, the time t has a value in a range from 0 to $(N_{CP,l} + N) * T_s$. Here, $T_{l,0}$ is a transmission timing of the SC-FDMA symbol. For example, $T_{l,0}$ = 0 may be satisfied. N is 2048. Here, e is a Napier's constant. Additionally, j is an imaginary unit. $\pi$ is the ratio of the circumference of a circle to its diameter.

Here, the ceiling function may be a function for acquiring a minimum integer within a range that does not fall below a certain value. Additionally, the floor function may be a function for acquiring a maximum integer within a range that does not exceed a certain value.

For example, the partial symbol may be a symbol in which at least part of the time continuous signals $s^{(p)}{}_l$ (t) is configured to 0. Here, the fact that at least part of the time continuous signals is configured to 0 does not include that at least part of the time continuous signals having the value given based on Equation (4) is 0. The partial symbol may be that at least part of the time continuous signals $s^{(p)}{}_l$ (t) is not given based on a prescribed equation. The prescribed equation may be an equation expressed by Equation (4).

For example, the partial symbol may be that the time continuous signal $s^{(p)}{}_l$ (t) is given based on Equation (4) in a range of t = 0 to t = $T_{partial}$, and 0 is configured in a range of t = $T_{partial}$ to t = $(N_{CP,l} + N) * T_s$. Here, $T_{partial}$ may be provided for each format of the random access preamble. Additionally, $T_{partial}$ may be provided for each format of the random access preamble. Additionally, $T_{partial}$ may be given based at least on the higher layer signaling.

The number of SC-FDMA symbols $N^{PUSCH-initial}{}_{symb}$ for the PUSCH initial transmission may be given based at least on a fifth value. In the condition (A1), the fifth value may be 1, or greater than or equal to 1. Additionally, in the condition (A2), the fifth value may be 0. Additionally, in the condition (A3), the fifth value may be 0.

In the condition (A1), the fifth value may be given based at least on the format of the random access preamble. For example, in the condition (A1), the fifth value may be given for each format of the random access preamble. Additionally, in the condition (A1), the fifth value may be given based at least on the higher layer signaling.

In the condition (A1), the fifth value may be given based at least on the length $T_{PRACH}$ of the format of the random access preamble. Furthermore, the fifth value may be given such that the length of the PUSCH is equal to or less than the length of the format of the random access preamble. For example, the fifth value may be configured to be the maximum $N^{PUSCH-initial}{}_{symb}$ that satisfies $N^{PUSCH-initial}{}_{symb} * T_{symb} < T_{PRACH}$.

The number of SC-FDMA symbols $N^{PUSCH-initial}{}_{symb}$ for the PUSCH initial transmission may be given based at least on the second value $N_{SRS}$, the third value $N^{PUSCH}{}_{start}$, and the fourth value $N^{UL}{}_{symb}$ in addition to the fifth value.

A method of mapping to the resource element of the second sequence by the multiplexing unit 1077 included in the terminal apparatus 1 will be described. Here, the second sequence may be a sequence of a complex-valued symbol. The second sequence may be a sequence given by discrete Fourier transform of the complex-valued symbol. The sequence given by the discrete Fourier transform of the complex-valued symbol is also referred to as a sequence of complex-valued symbol.

In a case that the condition (A1) is not satisfied, in a case that a first field (PUSCH ending symbol) included in the downlink control information indicating the PUSCH transmission indicates 1, the second sequence may not be mapped to the resource element of the last SC-FDMA symbol of the subframe. Here, the first field may indicate a termination symbol of the PUSCH. Furthermore, the fact that the condition (A1) is not satisfied may be that some or all of the condition (a1) to the condition (a6) are not at least satisfied. The termination symbol of the PUSCH may be the SC-FDMA symbol at which the PUSCH transmission terminates in the subframe in which the PUSCH is transmitted.

For example, in the PUSCH transmission, in a case that the condition (a1) is not satisfied and a first field (PUSCH ending symbol) included in the uplink grant indicating the PUSCH transmission indicates 1, the second sequence may not be mapped to the resource element of the last SC-FDMA symbol of the subframe. In other words, in a case that the PUSCH is transmitted in a step other than the first step (700) and the first field (PUSCH ending symbol) indicating the termination symbol of the PUSCH included in the uplink grant indicating the PUSCH transmission indicates 1, the second sequence may not be mapped to the resource element of the last SC-FDMA symbol of the subframe. Furthermore, in a case that the condition (a2) is not satisfied and the first field (PUSCH ending symbol) included in the uplink grant indicating the PUSCH transmission indicates 1, the second sequence may not be mapped to the resource element of the last SC-FDMA symbol of the subframe. The same applies to other conditions, and thus description thereof will be omitted.

Additionally, in the condition (A1), the second sequence need not be mapped to the resource element of the last one or one or more $N_{last}$ SC-FDMA symbols of the subframe. In other words, in the condition (A1), the second sequence need not be mapped to the resource element of the last one or one or more $N_{last}$ SC-FDMA symbols of the subframe. $N_{last}$ is also referred to as a sixth value $N_{last}$. Here, not being mapped to the resource element of the last one or one or more $N_{last}$ SC-FDMA symbols of the subframe may be not being mapped to the resource element of the SC-FDMA symbol included in the $N_{last}$ SC-FDMA symbols from the last of the subframe, from the last SC-FDMA symbol of the subframe. Furthermore, a portion from the last SC-FDMA symbol of the subframe to the $N_{last}$-th SC-FDMA symbol from the last of the subframe includes the last SC-FDMA symbol of the subframe and the $N_{last}$-th SC-FDMA symbol from the last of the subframe.

Furthermore, in the PUSCH transmission, the resource element to which the second sequence is mapped is a resource element at least included in a resource block allocated for the PUSCH. The resource blocks allocated for the PUSCH may be indicated based on the uplink grant or the configured uplink grant. Furthermore, the resource block allocated for the PUSCH may be given based on description and the like of a specification and the like. For example, in a case that the PUSCH is transmitted without the uplink grant, a prescribed resource block allocated for the PUSCH may be allocated beforehand (or may be given based on the description and the like of the specification). Additionally, the resource block allocated for the PUSCH may also be given based at least on the system information.

Furthermore, the second sequence is not mapped to the resource element used for transmission of the reference signal.

Furthermore, in a case that the SRS is transmitted in the subframe of the serving cell in which the PUSCH is transmitted, the second sequence is not mapped to the resource element of the last SC-FDMA symbol of the subframe.

Furthermore, in a case that the band (resource) for the PUSCH at least partially overlaps with the subframe of the cell-specific SRS and the terminal apparatus 1 is configured to a prescribed operation mode, the second sequence is not mapped to the resource element of the last SC-FDMA symbol of the subframe. Here, the prescribed operation mode may be a non-BL/CE mode or a BL/CE mode in which CEModeA is configured. Here, non-BL-CE is not to be a BL/CE (Bandwidth reduced Low complexity/Coverage Enhancement) mode. The BL/CE mode may be a mode that supports Machine Type Communication (MTC). CE Mode A is a first mode for the machine type communication.

In addition, the second sequence is not mapped to the resource element of the SC-FDMA symbol for which the first UE-specific SRS is configured in the subframe of the serving cell in which the PUSCH is transmitted.

Additionally, in a case that multiple timing advance groups (TAGs) are configured for the terminal apparatus 1, the second sequence is not mapped to the resource element of the SC-FDMA symbol for which the second UE-specific SRS is configured in the subframe of the cell in which the PUSCH is transmitted.

In addition, in a case that a second field (PUSCH starting position) included in the downlink control information and indicating a PUSCH transmission start symbol indicates 01, 10, or 11, the second sequence is not mapped to the resource element of the first SC-FDMA symbol of the subframe. Here, the PUSCH transmission start symbol may be an SC-FDMA symbol at which the transmission is started in the subframe in which the PUSCH is transmitted.

Additionally, the sixth value $N_{last}$ may be given based at least on the format of the random access preamble. For example, the sixth value $N_{last}$ may be given for each format of the random access preamble. Additionally, the sixth value $N_{last}$ may be given based at least on the higher layer signaling.

Additionally, the sixth value $N_{last}$ may be given based at least on the length $T_{PRACH}$ of the format of the random access preamble. Additionally, the sixth value $N_{last}$ may be given such that the length of the PUSCH transmission is equal to or less than the length of the format of the random access preamble. For example, the sixth value $N_{last}$ may be configured to be the maximum $N^{PUSCH-initial}_{symb}$ that satisfies $N^{PUSCH-initial}_{symb} * T_{symb} < T_{PRACH}$. Here, $T_{symb}$ is a length of the SC-FDMA symbol for the PUSCH transmission.

The fact that the second sequence is not mapped to a prescribed resource element may be that the second sequence is not mapped to a prescribed resource element among the resource elements included in the resource block allocated for the PUSCH transmission.

For example, in a case that the condition (A1) is not satisfied, in a case that the first field (PUSCH ending symbol) included in the uplink grant indicating the PUSCH transmission indicates 1, the second sequence may not be mapped to the resource element of the last SC-FDMA symbol of the subframe, among the resource elements included in the resource block allocated for the PUSCH transmission.

Additionally, in the condition (A1), the second sequence need not be mapped to the resource element of the last one or one or more $N_{last}$ SC-FDMA symbols of the subframe, among the resource elements included in the resource block allocated for the PUSCH transmission.

Furthermore, the fact that the second sequence is not mapped to the prescribed resource element may be that the second sequence is mapped to a resource element other than the prescribed resource element among the resource elements included in the resource block allocated for the PUSCH transmission.

For example, in a case that the condition (A1) is not satisfied, in a case that the first field (PUSCH ending symbol) included in the downlink control information indicating the PUSCH transmission indicates 1, the second sequence may be mapped to a resource element other than the resource element of the last SC-FDMA symbol of the subframe, among the resource elements included in the resource block allocated for the PUSCH transmission.

Additionally, in the condition (A1), the second sequence may be mapped to a resource element other than the resource element of the last one or one or more $N_{last}$ SC-FDMA symbols of the subframe, among the resource elements included in the resource block allocated for the PUSCH transmission.

Furthermore, the fact that the second sequence is not mapped to the prescribed resource element may be that the prescribed resource element is not included in the resource elements to which the second sequence is mapped.

For example, in a case that the condition (A1) is not satisfied, in a case that the first field (PUSCH ending symbol) included in the downlink control information indicating the PUSCH transmission indicates 1, the resource element of the last SC-FDMA symbol of the subframe may not be included in the resource elements to which the second sequence is mapped.

Additionally, in the condition (A1), the resource element of the last one or one or more $N_{last}$ SC-FDMA symbols of the subframe may not be included in the resource elements to which the second sequence is mapped.

Various aspects of the terminal apparatus 1 according to the present embodiment will be described below.

(1) To accomplish the object described above, aspects of the present invention are contrived to provide the following measures. That is, a first aspect of the present invention is a terminal apparatus 1, the terminal apparatus 1 including: a resource mapping unit configured to map a complex-valued symbol to a resource element in one subframe; and a transmitter configured to perform a transmission of a PUSCH including the complex-valued symbol in a prescribed subframe, in which in a case that the transmission of the PUSCH is transmission of the PUSCH in a 2 step contention based random access procedure, the complex-valued symbol is not mapped to the resource element of last one or more prescribed SC-FDMA symbols in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which the complex-valued symbol is mapped is the resource block at least included in a resource block allocated for the PUSCH.

(2) Furthermore, in the first aspect of the present invention, the complex-valued symbol may not be mapped to the resource element used for transmission of a reference signal, in a case that an SRS is transmitted in the subframe of a serving cell in which the PUSCH is transmitted, the complex-valued symbol may not be mapped to the resource element of the last SC-FDMA symbol in the subframe, in a case that at least part of a band (resource) for the PUSCH overlaps with the subframe of a cell-specific SRS and the terminal apparatus 1 is configured to a prescribed operation mode, the complex-valued symbol may not be mapped to the resource element of the last SC-FDMA symbol in the subframe, the complex-valued symbol may not be mapped to the resource element of the SC-FDMA symbol in which a first specific SRS is configured in the sub frame in which the PUSCH is transmitted, in a case that a plurality of timing advance groups is configured for the terminal apparatus 1, the complex-valued symbol may not be mapped to the resource element of the SC-FDMA symbol in which a second specific SRS is configured in the subframe in which the PUSCH is transmitted, and in a case that a second field (PUSCH starting position), included in the downlink control information, for indicating a transmission start symbol of the PUSCH indicates 01, 10, or 11, the complex-valued symbol may not be mapped to the resource element of the SC-FDMA symbol which is a first SC-FDMA symbol in the subframe.

(3) Furthermore, in the first aspect of the present invention, in a case that the transmission of the PUSCH is the transmission of the PUSCH in the 2 step contention based random access procedure, the last one or more prescribed SC-FDMA symbols may be given based at least on a random access preamble format.

(4) Furthermore, in the first aspect of the present invention, in a case that the transmission of the PUSCH is the transmission of the PUSCH in the 2 step contention based random access procedure, the last one or more prescribed SC-FDMA symbols may be given based at least on higher layer signaling.

(5) Furthermore, in the first aspect of the present invention, in a case that the transmission of the PUSCH is the transmission of the PUSCH in the 2 step contention based random access procedure, at least part of a time continuous signal of the last SC-FDMA symbol in the subframe transmitted in the PUSCH may be configured to 0, and a period in which the time continuous signal is configured to 0 may be given based at least on a random access preamble format.

(6) Furthermore, a second aspect of the present invention is a base station apparatus 3, the base station apparatus 3 including: a receiver configured to receive a PUSCH; and a demodulation unit configured to demodulate a complex-valued symbol to be mapped to a resource element of the PUSCH, in which in a case that transmission of the PUSCH is transmission of the PUSCH in a 2 step contention based random access procedure, the complex-valued symbol is not mapped to the resource element of last one or more prescribed SC-FDMA symbol in the prescribed subframe, in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and the resource element to which a second sequence is mapped is the resource block at least included in a resource block allocated for the PUSCH.

(7) Furthermore, in the second aspect of the present invention, the complex-valued symbol may not be mapped to the resource element used for transmission of a reference signal, in a case that an SRS is transmitted in the subframe of a serving cell in which the PUSCH is transmitted, the complex-valued symbol may not be mapped to the resource element of the last SC-FDMA symbol in the subframe, in a case that at least part of a band (resource) for the PUSCH overlaps with the subframe of a cell-specific SRS and a terminal apparatus 1 for transmitting the PUSCH is configured to a prescribed operation mode, the complex-valued symbol may not be mapped to the resource element of the last SC-FDMA symbol in the subframe, the complex-valued symbol may not be mapped to the resource element of the SC-FDMA symbol in which a first specific SRS is configured in the subframe in which the PUSCH is transmitted, in a case that a plurality of timing advance groups is configured for the terminal apparatus 1, the complex-valued symbol may not be mapped to the resource element of the SC-FDMA symbol for which a second specific SRS is configured in the subframe in which the PUSCH is transmitted, and in a case that a second field (PUSCH starting position), included in the downlink control information, for indicating a transmission start symbol of the PUSCH indicates 01, 10, or 11, the complex-valued symbol may not be mapped to the resource element of the SC-FDMA symbol which is a first SC-FDMA symbol in the subframe.

(8) Furthermore, in the second aspect of the present invention, in a case that the transmission of the PUSCH is the transmission of the PUSCH in the 2 step contention based random access procedure, the last one or more prescribed SC-FDMA symbols may be given based at least on a random access preamble format.

(9) Furthermore, in the second aspect of the present invention, in a case that the transmission of the PUSCH is the transmission of the PUSCH in the 2 step contention based random access procedure, the last one or more prescribed SC-FDMA symbols may be given based at least on higher layer signaling.

(10) Furthermore, in the second aspect of the present invention, in a case that the transmission of the PUSCH is the transmission of the PUSCH in the 2 step contention based random access procedure, at least part of a time continuous signal of the last SC-FDMA symbol in the subframe transmitted in the PUSCH may be configured to 0, and a period in which the time continuous signal is configured to 0 may be given based at least on a random access preamble format.

(11) Furthermore, a third aspect of the present invention is a terminal apparatus 1, the terminal apparatus 1 including: a coding unit configured to determine the number of SC-FDMA symbols $N^{PUSCH\text{-}initial}_{symb}$ used for initial transmission of a PUSCH; and a transmitter configured to transmit the PUSCH, in which the number of SC-FDMA symbols $N^{PUSCH\text{-}initial}_{symb}$ is given based at least on a first value $N^{PUSCH}_{end}$, the first value $N^{PUSCH}_{end}$ is 1 or greater than or equal to 1 in a first condition, is 1 in a second condition, and is 0 in a third condition, the first condition is that the PUSCH is transmitted in a 2 step contention based random access procedure, the second condition is that the PUSCH is transmitted in an LAA cell and the PUSCH is configured to be transmitted up to a last second SC-FDMA symbol in a subframe and a second value $N_{SRS}$ corresponding to the PUSCH is 0, and the third condition is different from the first condition and the second condition.

(12) Furthermore, in the third aspect of the present invention, the number of SC-FDMA symbols $N^{PUSCH\text{-}initial}_{symb}$ may be given based at least on the second value $N_{SRS}$ in addition to the first value $N^{PUSCH}_{end}$, the second value $N_{SRS}$ may be 1 in a case that a prescribed condition is satisfied, the prescribed condition may be to satisfy at least some or all of a third condition to a seventh condition, the third condition may be that one uplink cell (UL cell) is configured for the terminal apparatus 1 and the initial transmission of the PUSCH and transmission of an SRS are configured to a same subframe, the fourth condition may be that the initial transmission of the PUSCH and the transmission of the SRS are performed in the subframe of a same serving cell, the fifth condition may be that at least part of a band (resource or frequency resource) for the initial transmission of the PUSCH overlaps with a band configured to a cell-specific SRS, the sixth condition may be that, in the sub frame for the initial transmission of the PUSCH, a first UE-specific SRS is configured, the seventh condition may be that, in the subframe for the initial transmission of the PUSCH, a second UE-specific SRS is configured and a plurality of timing advance groups is configured for the terminal apparatus 1, and the second value $N_{SRS}$ may be 0 in a case that the prescribed condition is not satisfied.

(13) Furthermore, in the third aspect of the present invention, the number of SC-FDMA symbols $N^{PUSCH\text{-}initial}_{symb}$ may be given based at least on a third value $N^{PUSCH}_{start}$ in addition to the first value $N^{PUSCH}_{end}$ and the second value $N_{SRS}$, and the third value $N^{PUSCH}_{start}$ may be 1 in a case that transmission of the PUSCH is configured in the LAA cell and the transmission of the PUSCH is indicated not to be started from a head of a first SC-FDMA symbol, and is 0 in another case.

(14) Furthermore, in the third aspect of the present invention, in the first condition, the first value $N^{PUSCH}_{end}$ may be given based at least on a format of a random access preamble.

(15) Furthermore, in the third aspect of the present invention, in the first condition, the first value $N^{PUSCH}_{end}$ may be given based at least on higher layer signaling.

(16) Furthermore, in the third aspect of the present invention, in the first condition, at least part of a time continuous signal of the last SC-FDMA symbol in the subframe transmitted in the PUSCH may be configured to 0, and a period in which the time continuous signal is configured to 0 may be given based at least on the format of the random access preamble.

(17) Furthermore, a fourth aspect of the present invention is a base station apparatus 3, the base station apparatus 3 includes: a decoding unit configured to determine the number of SC-FDMA symbols $N^{PUSCH-initial}_{symb}$ used for initial transmission of a PUSCH; and a transmitter configured to receive the PUSCH, in which the number of SC-FDMA symbols $N^{PUSCH-initial}_{symb}$ is given based at least on a first value $N^{PUSCH}_{end}$, the first value $N^{PUSCH}_{end}$ is 1 or greater than or equal to 1 in a first condition, is 1 in a second condition, and is 0 in a third condition, the first condition is that the PUSCH is transmitted in a 2 step contention based random access procedure, the second condition is that the PUSCH is transmitted in an LAA cell and the PUSCH is configured to be transmitted up to a last second SC-FDMA symbol in a subframe and a second value $N_{SRS}$ corresponding to the PUSCH is 0, and the third condition is different from the first condition and the second condition.

(18) Furthermore, in the fourth aspect of the present invention, the number of SC-FDMA symbols $N^{PUSCH-initial}_{symb}$ may be given based at least on the second value $N_{SRS}$ in addition to the first value $N^{PUSCH}_{end}$, the second value $N_{SRS}$ may be 1 in a case that a prescribed condition is satisfied, the prescribed condition may be to satisfy at least some or all of a third condition to a seventh condition, the third condition may be that one uplink cell (UL cell) is configured for the terminal apparatus 1 and the initial transmission of the PUSCH and transmission of an SRS are configured to a same subframe, the fourth condition may be that the initial transmission of the PUSCH and the transmission of the SRS are performed in the subframe of a same serving cell, the fifth condition may be that at least part of a band (resource or frequency resource) for the initial transmission of the PUSCH overlaps with a band configured to a cell-specific SRS, the sixth condition may be that, in the subframe for the initial transmission of the PUSCH, a first UE-specific SRS is configured, the seventh condition may be that, in the subframe for the initial transmission of the PUSCH, a second UE-specific SRS is configured and a plurality of timing advance groups is configured for the terminal apparatus 1, and the second value $N_{SRS}$ may be 0 in a case that the prescribed condition is not satisfied.

(19) Furthermore, in the fourth aspect of the present invention, the number of SC-FDMA symbols $N^{PUSCH-initial}_{symb}$ may be given based at least on a third value $N^{PUSCH}_{start}$ in addition to the first value $N^{PUSCH}_{end}$ and the second value $N_{SRS}$, and the third value $N^{PUSCH}_{start}$ may be 1 in a case that transmission of the PUSCH is configured in the LAA cell and the transmission of the PUSCH is indicated not to be started from a head of a first SC-FDMA symbol, and is 0 in another case.

(20) Furthermore, in the fourth aspect of the present invention, in the first condition, the first value $N^{PUSCH}_{end}$ may be given based at least on a format of a random access preamble.

(21) Furthermore, in the fourth aspect of the present invention, in the first condition, the first value $N^{PUSCH}_{end}$ may be given based at least on higher layer signaling.

(22) Furthermore, in the fourth aspect of the present invention, in the first condition, at least part of a time continuous signal of the last SC-FDMA symbol in the subframe transmitted in the PUSCH may be configured to 0, and a period in which the time continuous signal is configured to 0 may be given based at least on the format of the random access preamble.

Consequently, the terminal apparatus and the base station apparatus can mutually efficiently perform the random access procedure.

The base station apparatus 3 according to one aspect of the present invention can also be realized as an aggregation (an apparatus group) including multiple apparatuses. Each of the apparatuses configuring such an apparatus group may include some or all portions of each function or each functional block of the base station apparatus 3 according to the above-described embodiment. The apparatus group may include each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

A program running on an apparatus according to one aspect of the present invention may serve as a program that controls a Central Processing Unit (CPU) and the like to cause a computer to operate in such a manner as to realize the functions of the above-described embodiment according to one aspect of the present invention. Programs or the information handled by the programs are temporarily read into a volatile memory, such as a Random Access Memory (RAM) while being processed, or stored in a non-volatile memory, such as a flash memory, or a Hard Disk Drive (HDD), and then read by the CPU to be modified or rewritten, as necessary.

Moreover, the apparatuses in the above-described embodiment may be partially enabled by a computer. In such a case, a program for realizing such control functions may be recorded on a computer-readable recording medium to cause a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiment may be implemented or performed on an electric circuit, that is, typically an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may be constituted of a digital circuit, or may be constituted of an analog circuit. Furthermore, in a case that with advances in semiconductor technology, a circuit integration technology appears that replaces the present integrated circuits, it is also possible to use an integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

Industrial Applicability

An aspect of the present invention can be utilized, for example, in a communication system, communication equipment (for example, a cellular phone apparatus, a base station apparatus, a radio LAN apparatus, or a sensor device), an integrated circuit (for example, a communication chip), or a program.

Reference Signs List

| 1 (1A, 1B, 1C) | Terminal apparatus |
| 3 | Base station apparatus |
| 101 | Higher layer processing unit |
| 103 | Controller |

| 105 | Receiver |
|---|---|
| 107 | Transmitter |
| 109 | Transmit and/or receive antenna |
| 1011 | Radio resource control unit |
| 1013 | Scheduling unit |
| 1051 | Decoding unit |
| 1053 | Demodulation unit |
| 1055 | Demultiplexing unit |
| 1057 | Radio receiving unit |
| 1059 | Channel measurement unit |
| 1071 | Coding unit |
| 1073 | PUSCH generation unit |
| 1075 | PUCCH generation unit |
| 1077 | Multiplexing unit |
| 1079 | Radio transmitting unit |
| 10711 | Uplink reference signal generation unit |
| 301 | Higher layer processing unit |
| 303 | Controller |
| 305 | Receiver |
| 307 | Transmitter |
| 309 | Transmit and/or receive antenna |
| 3011 | Radio resource control unit |
| 3013 | Scheduling unit |
| 3051 | Data demodulation/decoding unit |
| 3053 | Control information demodulation/decoding unit |
| 3055 | Demultiplexing unit |
| 3057 | Radio receiving unit |
| 3059 | Channel measurement unit |
| 3071 | Coding unit |
| 3073 | Modulating unit |
| 3075 | Multiplexing unit |
| 3077 | Radio transmitting unit |
| 3079 | Downlink reference signal generation unit |

**Claims**

1. A terminal apparatus comprising:

   a resource mapping unit configured to map a complex-valued symbol to a resource element in one subframe; and
   a transmitter configured to perform a transmission of a PUSCH including the complex-valued symbol in a prescribed subframe,
   wherein in a case that the transmission of the PUSCH is a transmission of the PUSCH in a 2 step contention based random access procedure, the complex-valued symbol is not mapped to the resource element of last one or more prescribed SC-FDMA symbols in the prescribed subframe,
   in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and
   the resource element to which the complex-valued symbol is mapped is the resource block at least included in a resource block allocated for the PUSCH.

2. The terminal apparatus according to claim 1,
   wherein the complex-valued symbol is not mapped to the resource element used for a transmission of a reference signal,
   in a case that an SRS is transmitted in the subframe of a serving cell in which the PUSCH is transmitted, the complex-valued symbol is not mapped to the resource element of the last SC-FDMA symbol in the subframe,
   in a case that at least part of a band (resource) for the PUSCH overlaps with the subframe of a cell-specific SRS and the terminal apparatus is configured to a prescribed operation mode, the complex-valued symbol is not mapped to the resource element of the last SC-FDMA symbol in the subframe,

the complex-valued symbol is not mapped to the resource element of the SC-FDMA symbol in which a first specific SRS is configured in the subframe in which the PUSCH is transmitted,

in a case that a plurality of timing advance groups is configured for the terminal apparatus, the complex-valued symbol is not mapped to the resource element of the SC-FDMA symbol in which a second specific SRS is configured in the subframe in which the PUSCH is transmitted, and

in a case that a second field (PUSCH starting position), included in the downlink control information, for indicating a transmission start symbol of the PUSCH indicates 01, 10, or 11, the complex-valued symbol is not mapped to the resource element of the SC-FDMA symbol which is a first SC-FDMA symbol in the subframe.

3. The terminal apparatus according to claim 2,
wherein in a case that the transmission of the PUSCH is the transmission of the PUSCH in the 2 step contention based random access procedure, the last one or more prescribed SC-FDMA symbols are given based at least on a random access preamble format.

4. The terminal apparatus according to claim 2,
wherein in a case that the transmission of the PUSCH is the transmission of the PUSCH in the 2 step contention based random access procedure, the last one or more prescribed SC-FDMA symbols are given based at least on higher layer signaling.

5. The terminal apparatus according to claim 2,
wherein in a case that the transmission of the PUSCH is the transmission of the PUSCH in the 2 step contention based random access procedure, at least part of a time continuous signal of the last SC-FDMA symbol in the subframe transmitted in the PUSCH is configured to 0, and
a period in which the time continuous signal is configured to 0 is given based at least on a random access preamble format.

6. A base station apparatus comprising:

a receiver configured to receive a PUSCH; and
a demodulation unit configured to demodulate a complex-valued symbol to be mapped to a resource element of the PUSCH,
wherein in a case that transmission of the PUSCH is transmission of the PUSCH in a 2 step contention based random access procedure, the complex-valued symbol is not mapped to the resource element of last one or more prescribed SC-FDMA symbols in a prescribed subframe,
in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and
the resource element to which a second sequence is mapped is the resource block at least included in a resource block allocated for the PUSCH.

7. The base station apparatus according to claim 6,
wherein the complex-valued symbol is not mapped to the resource element used for transmission of a reference signal,
in a case that an SRS is transmitted in the subframe of a serving cell in which the PUSCH is transmitted, the complex-valued symbol is not mapped to the resource element of the last SC-FDMA symbol in the subframe,
in a case that at least part of a band (resource) for the PUSCH overlaps with the subframe of a cell-specific SRS and a terminal apparatus for transmitting the PUSCH is configured to a prescribed operation mode, the complex-valued symbol is not mapped to the resource element of the last SC-FDMA symbol in the subframe,
the complex-valued symbol is not mapped to the resource element of the SC-FDMA symbol in which a first specific SRS is configured in the subframe in which the PUSCH is transmitted,
in a case that a plurality of timing advance groups is configured for the terminal apparatus, the complex-valued symbol is not mapped to the resource element of the SC-FDMA symbol in which a second specific SRS is configured in the subframe in which the PUSCH is transmitted, and
in a case that a second field (PUSCH starting position), included in the downlink control information, for indicating a transmission start symbol of the PUSCH indicates 01, 10, or 11, the complex-valued symbol is not mapped to the resource element of the SC-FDMA symbol which is a first SC-FDMA symbol in the subframe.

8.  The base station apparatus according to claim 7,
    wherein in a case that the transmission of the PUSCH is the transmission of the PUSCH in the 2 step contention based random access procedure, the last one or more prescribed SC-FDMA symbols are given based at least on a random access preamble format.

9.  The base station apparatus according to claim 7,
    wherein in a case that the transmission of the PUSCH is the transmission of the PUSCH in the 2 step contention based random access procedure, the last one or more prescribed SC-FDMA symbols are given based at least on higher layer signaling.

10. The base station apparatus according to claim 7,
    wherein in a case that the transmission of the PUSCH is the transmission of the PUSCH in the 2 step contention based random access procedure, at least part of a time continuous signal of the last SC-FDMA symbol in the subframe transmitted in the PUSCH is configured to 0, and
    a period in which the time continuous signal is configured to 0 is given based at least on a random access preamble format.

11. A communication method used for a terminal apparatus, the communication method comprising the steps of:

    mapping a complex-valued symbol to a resource element in one subframe; and
    transmitting a PUSCH including the complex-valued symbol in a prescribed subframe,
    wherein in a case that the transmission of the PUSCH is transmission of the PUSCH in a 2 step contention based random access procedure, the complex-valued symbol is not mapped to the resource element of last one or more prescribed SC-FDMA symbols in the prescribed subframe,
    in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and
    the resource element to which the complex-valued symbol is mapped is the resource block at least included in a resource block allocated for the PUSCH.

12. A communication method used for a base station apparatus, the communication method comprising the steps of:

    receiving a PUSCH; and
    demodulating a complex-valued symbol to be mapped to a resource element of the PUSCH,
    wherein in a case that transmission of the PUSCH is transmission of the PUSCH in a 2 step contention based random access procedure, the complex-valued symbol is not mapped to the resource element of last one or more prescribed SC-FDMA symbols in a prescribed subframe,
    in a case that the transmission of the PUSCH is not the transmission of the PUSCH in the 2 step contention based random access procedure and a first field (PUSCH ending symbol) included in downlink control information for indicating the transmission of the PUSCH indicates 1, the complex-valued symbol is not mapped to the resource element of a last SC-FDMA symbol in the prescribed subframe, and
    the resource element to which a second sequence is mapped is the resource block at least included in a resource block allocated for the PUSCH.

FIG. 1

TIME

RADIO FRAME 10 ms

SUBFRAME 1 ms

SLOT 0.5 ms

| SUBFRAME #0 | SUBFRAME #1 | SUBFRAME #2 | SUBFRAME #3 | SUBFRAME #4 | SUBFRAME #5 | SUBFRAME #6 | SUBFRAME #7 | SUBFRAME #8 | SUBFRAME #9 |

FIG. 2

EP 3 576 482 A1

FIG. 3

EP 3 576 482 A1

FIG. 4

FIG. 5

FIG. 6

FIG. 7

FIG. 8

2 STEP CONTENTION BASED RANDOM ACCESS PROCEDURE

TERMINAL APPARATUS 1

BASE STATION APPARATUS 3

RANDOM ACCESS PREAMBLE AND
IDENTIFIER OF TERMINAL APPARATUS 1

FIRST STEP (700)

CONTENTION RESOLUTION

SECOND STEP (702)

# FIG. 9

MODIFICATION OF 2 STEP CONTENTION
BASED RANDOM ACCESS PROCEDURE

TERMINAL
APPARATUS 1

BASE STATION
APPARATUS 3

RANDOM ACCESS PREAMBLE AND
IDENTIFIER OF TERMINAL APPARATUS 1

FIRST STEP (800)

RANDOM ACCESS RESPONSE

SECOND STEP (802)

IDENTIFIER OF TERMINAL APPARATUS 1

THIRD STEP (804)

CONTENTION RESOLUTION

FOURTH STEP (806)

# FIG. 10

NON-CONTENTION BASED RANDOM ACCESS PROCEDURE

TERMINAL
APPARATUS 1

BASE STATION
APPARATUS 3

ALLOCATION OF RANDOM
ACCESS PREAMBLE

ZEROTH STEP (900)

RANDOM ACCESS PREAMBLE

FIRST STEP (902)

RANDOM ACCESS RESPONSE

SECOND STEP (904)

# FIG. 11

| EVENT | 4 STEP CONTENTION BASED RANDOM ACCESS PROCEDURE | 2 STEP CONTENTION BASED RANDOM ACCESS PROCEDURE | NON-CONTENTION BASED RANDOM ACCESS PROCEDURE |
|---|---|---|---|
| (i) INITIAL ACCESS | VALID | VALID | *INVALID* |
| (ii) RRC CONNECTION RE-ESTABLISHMENT | VALID | VALID | *INVALID* |
| (iii) HANDOVER | VALID | VALID | VALID |
| (iv) DOWNLINK DATA ARRIVAL | VALID | *INVALID* | VALID |
| (v) UPLINK DATA ARRIVAL | VALID | VALID | *INVALID* |
| (vi) TIME ADJUSTMENT FOR sTAG | *INVALID* | *INVALID* | VALID |

# FIG. 12

EP 3 576 482 A1

| EVENT | 4 STEP CONTENTION BASED RANDOM ACCESS PROCEDURE | 2 STEP CONTENTION BASED RANDOM ACCESS PROCEDURE | NON-CONTENTION BASED RANDOM ACCESS PROCEDURE |
|---|---|---|---|
| (A) CASE THAT RANDOM ACCESS PROCEDURE IS STARTED BY RRC | VALID | VALID | VALID |
| (B) CASE THAT MAC ITSELF STARTS RANDOM ACCESS PROCEDURE | VALID | VALID | *INVALID* |
| (C) CASE THAT RANDOM ACCESS PROCEDURE IN PRIMARY CELL IS STARTED BASED ON PDCCH ORDER | VALID | *INVALID* | VALID |
| (D) CASE THAT RANDOM ACCESS PROCEDURE IN SECONDARY CELL IS STARTED BASED ON PDCCH ORDER | *INVALID* | *INVALID* | VALID |

# FIG. 13

EP 3 576 482 A1

LENGTH $T_{PRACH}$ OF FORMAT
OF RANDOM ACCESS PREAMBLE

FREQUENCY
(SUBCARRIER
INDEX k)

RANDOM ACCESS
PREAMBLE

THE NUMBER OF SC-FDMA SYMBOLS OF PUSCH $N^{PUSCH}_{symb} = N^{PUSCH-initial}_{symb}$

PUSCH

| SC-FDMA SYMBOL | | | | | | | | | | | | | |
|---|---|---|---|---|---|---|---|---|---|---|---|---|---|

#0 #1 #2 #3 #4 #5 #6 #7 #8 #9 #10 #11 #12 #13

TRANSMISSION TIMING

TIME (SYMBOL INDEX l)

# FIG. 14

FIG. 15

**INTERNATIONAL SEARCH REPORT**

| International application No. |
| --- |
| PCT/JP2018/002450 |

**A. CLASSIFICATION OF SUBJECT MATTER**
Int.Cl. H04W74/08(2009.01)i, H04W72/04(2009.01)i

According to International Patent Classification (IPC) or to both national classification and IPC

**B. FIELDS SEARCHED**

Minimum documentation searched (classification system followed by classification symbols)
Int.Cl. H04B7/24-7/26, H04W4/00-99/00

Documentation searched other than minimum documentation to the extent that such documents are included in the fields searched
    Published examined utility model applications of Japan      1922-1996
    Published unexamined utility model applications of Japan    1971-2018
    Registered utility model specifications of Japan            1996-2018
    Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | ERICSSON, NR two-step random access procedure, 3GPP TSG RAN WG1 NR adhoc R1-1700300, 10 January 2017, paragraph 2 | 1-12 |
| A | PANTECH, Further consideration on aperiodic SRS solutions, 3GPP TSG-RAN WG1#61 R1-102840, 3GPP, 04 May 2010, paragraphs 2, 3 | 1-12 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04.04.2018 | 17.04.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/002450 |

C (Continuation).    DOCUMENTS CONSIDERED TO BE RELEVANT

| Category* | Citation of document, with indication, where appropriate, of the relevant passages | Relevant to claim No. |
|---|---|---|
| A | LG ELECTRONICS, Clarification of PUSCH rate matching with SRS, 3GPP TSG-RAN WG1#78b R1-144538, 3GPP, 11 October 2014, paragraph 1 | 1-12 |

Form PCT/ISA/210 (continuation of second sheet) (January 2015)

**EP 3 576 482 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017012884 A

**Non-patent literature cited in the description**

- *3GPP TS 36.211 V13.0.0,* December 2015
- *3GPP TS 36.212 V13.0.0,* December 2015
- *3GPP TS 36.213 V13.0.0,* December 2015
- *3GPP TS 36.321 V13.0.0,* December 2015
- *3GPP TS 36.331 V13.0.0,* December 2015